# EUROPEAN PATENT APPLICATION

(11) **EP 4 796 954 A1**
(43) Date of publication of application: **26.08.2026**
(21) Application number: 25315058.5
(22) Date of filing: 20.02.2025
(51) Int. Cl.: G01S 13/74, G01S 13/84, H04W 4/80, H04W 64/00

(54) **METHOD AND SYSTEM FOR ESTIMATING GEOMETRICAL METRICS BETWEEN DEVICES**

(71) Applicant: RivieraWaves, 06410 Biot (FR)
(72) Inventor: Guillaume, Rellier, 06410 BIOT (FR)
(74) Representative: Hautier IP

(57) **Abstract**

A method (100) for estimating geometrical metrics between two radio signal transceivers (210, 220) using phase-based measurements and coherence group processing. The method involves acquiring measurement results from both transceivers (210, 220), defining coherence groups based on time synchronization or antenna pairing, constructing a grid of candidate metric values, applying a deflation loop to each value, and repeating the process until a stopping criterion is met to determine the corresponding geometrical metric value.

## Description

### Introduction

The present invention relates to the technical field of wireless communication and more specifically, to a method for estimating geometrical metrics between devices.

### Background

Bluetooth Low Energy (BLE) technology has gained significant popularity due to its low power consumption and ease of use in various applications, including proximity sensing and location tracking. One important feature of BLE is the Channel Sounding procedure, which enables distance estimation between two devices supporting this functionality. This process involves a series of steps, resulting in specific sets of measurements on each device based on their roles as initiator or reflector and the type of step.

The measurements obtained during the Channel Sounding procedure can be categorized into three types: time (between transmission and reception, ToA_ToD, or reception and transmission, ToD_ToA), phase, and frequency. Frequency measurements are utilized to synchronize devices and provide intermediate data for the protocol layer. However, due to the narrowband nature of BLE signals, ToA/ToD-based measurements cannot achieve the desired distance estimation accuracy, typically around 50 centimeters.

The reliance on ToA/ToD measurements for distance estimation in BLE systems presents several challenges. Firstly, the limited bandwidth of BLE signals makes it difficult to achieve high-precision time measurements, leading to inaccuracies in distance estimation. Secondly, the susceptibility of ToA/ToD measurements to multi-path effects and clock drift further complicates the process, resulting in additional errors. Though time-based measurements are useful for ambiguity resolving and security considerations, their limitations create a need for an alternative approach that can provide more accurate distance estimation using BLE technology, which is the main purpose of phase-based measurements. It is therefore an objective of the present invention to partially overcome the limitations of the current state-of-the-art.

### Summary

The present technology has been designed to overcome at least some drawbacks present in prior art solutions.

According to an embodiment, the present invention refers to a method for estimating geometrical metrics between two radio signal transceivers using phase-based measurements and coherence group processing. The method is designed to be executed by at least one radio signal processing system comprising both the first and second radio signal transceivers.

The method begins with the first radio signal transceiver acquiring a set of measurement results, which includes 2-way frequency responses for a predetermined list of frequencies. Each 2-way frequency response consists of vectors of complex-valued data. The first radio signal transceiver then defines a coherence group, which can include measurements taken at the same time frame, during the same application, or from the same pair of antennas.

Next, the first radio signal processing unit constructs a grid of candidate geometrical metric values and applies a deflation loop to each value in the grid. The deflation loop involves computing pseudo-spectra using coherence group-wise correlations and/or scalar products and finding the maximum correlation. The contribution of the candidate geometrical metric value is then estimated, and new input data is generated by removing this contribution from the original input data. This process is repeated until a stopping criterion is met, at which point the candidate geometrical metric value corresponds to the actual geometrical metric.

According to an embodiment, the present invention relates to a method for estimating a geometrical metric between a first radio signal transceiver and a second radio signal transceiver, using phase-based measurements and coherence group processing, the method being configured to be executed by a radio signal processing system comprising the first radio signal transceiver and the second radio signal transceiver, the method comprising the following steps:
a) Acquiring, by the first radio signal transceiver, a first set of measurement results (PCT), the first set of measurement results (PCT) comprising a set of 2-way frequency responses, the set of 2-way frequency responses comprising a measured 2-way frequency response for each frequency of a predetermined list of frequencies, each of these 2-way frequency responses comprising vectors of complex-valued data;
b) Defining, by a processing unit of the first radio signal transceiver, at least one set of coherence groups, each coherence group of this set of coherence group comprising at least one subset of the first set of measurement results (PCT), each subset of the first set of measurement results comprising:
   - Results of measurements taken at the same time frame; and/or
   - Results of measurements taken during the same application running on at least one among said first radio signal transceiver and said second radio signal transceiver; and/or
   - Results of measurements taken when at least one radio signal transceiver among said first radio signal transceiver and said second radio signal transceiver is stationary or moving at a certain speed regarding the at least another radio signal transceiver taken among said first radio signal transceiver and said second radio signal transceiver; and/or
   - Results of measurements from the same pair of antennas, preferably one from each radio signal transceiver taken among said first radio signal transceiver and said second radio signal transceiver;
c) Constructing, by the processing unit of the first radio signal transceiver, a grid of candidate geometrical metric values;
d) Selecting input data, said input data comprising the first set of measurement results (PCT);
e) Applying a deflation loop on the first set of measurement results (PCT), by the processing unit of the first radio signal transceiver, the application of a deflation loop comprising:
   i. Computing a pseudo-spectrum indexed by the geometrical metric values in the grid, using scalar products, preferably made group per group; and
   ii. Finding the geometrical metric value corresponding to the pseudo-spectrum maximum; and
   iii. Estimating the contribution of this candidate geometrical metric value; and
   iv. Generating new input data by removing the estimated contribution from the input data;
   v. Repeating steps i to iv on the new input data until a stopping criterion is met.
f) when the stopping criterion is met, the final estimated geometrical metric value is selected among the set of candidate geometrical values.

According to an embodiment, the present invention relates to a method for estimating geometrical metrics between two radio signal transceivers using phase-based measurements and coherence group processing. This method is designed to be executed by at least one radio signal processing system that comprises both the initiator and second radio signal transceivers.

The first step in this method involves acquiring a set of measurement results, referred to as PCT, by the first radio signal transceiver. This set includes multiple 2-way frequency responses, each comprising vectors of complex-valued data for various frequencies from a predetermined list. Coherence groups are then defined using at least one processing unit of the first radio signal transceiver. These coherence groups consist of specific combinations of measurement results, such as those taken at the same time frame, during the same application, or when the radio signal transceivers are stationary or moving relative to each other. Measured data from the same pair of antennas can also be included in a coherence group.

The method proceeds by constructing a grid of candidate geometrical metric values using the processing unit of the first radio signal transceiver. Input data, which includes the first set of measurement results (PCT), is then selected for each iteration of the deflation loop. Within this loop, at least one pseudo-spectrum is computed using coherence group-wise correlations and/or scalar products. The maximum correlation is found, and the contribution of the candidate geometrical metric value is estimated based on this correlation. New input data is generated by removing the estimated contribution from the previous input data, and the process is repeated until a stopping criterion is met. The use of coherence groups and incoherent sums over coherence groups of scalar products within coherence groups results in improved robustness to channel variations during the procedure duration. This is because the method averages out the effects of these channel variations across multiple measurements within a coherence group, leading to more accurate geometrical metric estimations. Simplified computations are another advantage of this method. Unlike other methods that require complex algebraic computations like eigenanalysis for pseudo-spectrum calculation or handling multipath issues, the present invention employs a more straightforward approach using coherence group-wise correlations and scalar products. This reduces the overall complexity of the algorithm compared to more complex methods such as the MUSIC method or SVM.

Furthermore, the method's efficiency is enhanced through the use of a 2-steps (coarse/fine) approach for contribution estimation. In the coarse step, a large number of candidate geometrical metric values are estimated using a fast algorithm. In the fine step, the most promising candidates are further refined to provide more accurate estimates. This two-step process allows for faster convergence and more precise results.

According to an embodiment, the present invention relates also to a method for estimating a geometrical metric between a first radio signal transceiver and a second radio signal transceiver, using phase-based measurements and coherence group processing, the method comprising the following steps:
a) Acquiring a first set of measurement results (PCT), the first set of measurement results (PCT) comprising a set of 2-way frequency responses, the set of 2 -way frequency responses comprising a measured 2-way frequency response for each frequency of a predetermined list of frequencies, each of these 2-way frequency responses comprising vectors of complex-valued data;
b) Defining at least one set of coherence groups, each coherence group of this set of coherence group comprising at least one subset of the first set of measurement results (PCT), each subset of the first set of measurement results comprising:
   - Results of measurements taken at the same time frame; and/or
   - Results of measurements taken during the same application running on at least one among said first radio signal transceiver and said second radio signal transceiver; and/or
   - Results of measurements taken when at least one radio signal transceiver among said first radio signal transceiver and said second radio signal transceiver is stationary or moving at a certain speed regarding the at least another radio signal transceiver taken among said first radio signal transceiver and said second radio signal transceiver; and/or
   - Results of measurements from the same pair of antennas, preferably one from each radio signal transceiver taken among said first radio signal transceiver and said second radio signal transceiver;
c) Constructing a grid of candidate geometrical metric values;
d) Selecting input data, said input data comprising the first set of measurement results (PCT);
e) Applying a deflation loop on the first set of measurement results (PCT) the application of a deflation loop comprising:
   i. Computing a pseudo-spectrum indexed by the geometrical metric values in the grid, using scalar products, preferably made group per group; and
   ii. Finding the geometrical metric value corresponding to the pseudo-spectrum maximum; and
   iii. Estimating the contribution of this candidate geometrical metric value; and
   iv. Generating new input data by removing the estimated contribution from the input data;
   v. Repeating steps i to iv on the new input data until a stopping criterion is met;
f) when the stopping criterion is met, the final estimated geometrical metric value is selected among the set of candidate geometrical values.

According to an embodiment, the present invention relates to a computer program designed for estimating geometrical metrics between two radio signal transceivers, specifically an initiator and a reflector. This software, when executed by at least one processing unit, implements methods for calculating these metrics based on any of the previously claimed techniques.

In more detail, this embodiment encompasses a computer product program that performs the function of estimating geometrical distances or angles between two radio transceivers. The first and second transceivers are capable of transmitting and receiving radio signals respectively, but preferably not in the same order. The software, when executed by a processing unit, implements algorithms to determine the metric based on received signal data from both transceivers. This estimation is crucial for various applications such as localization, navigation, or communication systems that rely on accurate distance measurements between radio transceivers.

According to an embodiment, the present invention relates to a computer product program for estimating at least one geometrical metric between a first radio signal transceiver and a second radio signal transceiver which, when executed by at least one processing unit, executes the method (100) according to any of the previous claims.

According to another aspect, the present invention relates to a computer-readable storage medium storing instructions that enable a processing unit to execute specific functions upon being read and executed. In more detail, this embodiment involves a non-transitory memory device, such as a hard disk, solid-state drive, or compact disc, comprising program instructions. Upon execution by a processing unit, these instructions cause a processing unit to carry out the steps defined by the present invention. By providing a computer-readable storage medium with the necessary instructions, the present invention enables the implementation and execution of these methods on different processing units.

According to another aspect, the present invention relates to a computer-readable storage medium storing instructions that, upon being executed by a processing system, cause the processing system to perform the steps of the present invention.

According to an embodiment, the present invention pertains to a radio signal transceiver, specifically an initiator type, designed for wireless communication with second radio signal transmitters. This device encompasses three primary components: a wireless communication unit, a memory unit, and a processing unit.

The wireless communication unit is responsible for sending and receiving data to at least one second radio signal transceiver. It facilitates the exchange of information between the initiator and reflector devices through radio waves.

The memory unit is configured to store data used for the operation of the device. This may include program instructions, configuration settings, or other relevant data.

The processing unit executes a computer program stored in the memory unit. The execution of this program enables the first radio signal transceiver or the second radio signal transceiver to perform various functions and tasks as required by its intended application.

According to an embodiment, the present invention relates to a first radio signal transceiver comprising:
- A wireless communication unit configured to send and receive data to a second radio signal transceiver;
- A memory unit configured to store data and a computer product program according to the present invention;
- A processing unit configured to execute the computer product program.

According to an embodiment, the present invention pertains to a radio signal transceiver system, specifically a first radio signal transceiver. This transceiver includes a wireless communication unit that is capable of sending and receiving data to at least one second radio signal transceiver. The inclusion of this feature enables effective two-way communication between the initiator and reflector transceivers, thereby enhancing the reliability and efficiency of the system.

Furthermore, the inventive first radio signal transceiver comprises a memory unit configured to store data. This feature allows for the storage and retrieval of essential information within the transceiver itself, reducing the need for external data sources and increasing the self-sufficiency of the device. Additionally, the memory unit can accommodate at least one computer product program, expanding the functionality of the transceiver by enabling it to run custom software applications.

Lastly, the first radio signal transceiver incorporates a processing unit that is configured to execute the stored computer product program. This feature enables the transceiver to perform complex computations and tasks based on the instructions provided by the software, thereby expanding its capabilities beyond simple data transmission and reception.

According to an embodiment, the present invention refers to a radio signal processing system for estimating geometrical metrics between two transceivers using phase-based measurements and coherence group processing.

The system comprises a first radio signal transceiver and a second radio signal transceiver. The first radio signal transceiver includes a wireless communication, unit, a memory unit, and a processing unit. The wireless communication unit is configured to send and receive data to the second radio signal transceiver. The memory unit stores data and at least one computer program. The processing unit acquires a set of measurement results, defines coherence groups, constructs a grid of candidate geometrical metric values, selects input data, applies a deflation loop for candidate values in the grid, and generates new input data based on the estimated contribution of the candidate value. This process is repeated until a stopping criterion is met.

The second radio signal transceiver includes a wireless communication unit, a memory unit, and a processing unit. The wireless communication unit sends and receives data to the first radio signal transceiver. The memory unit stores data and instructions. The processing unit executes the instructions received from the first radio signal transceiver.

The system is configured to use phase-based measurements and coherence group processing to estimate geometrical metrics between the two transceivers. The deflation loop involves computing pseudo-spectra using coherence group-wise correlations and/or scalar products, finding the maximum correlation, estimating the contribution of each candidate value, and generating new input data based on the estimated contribution. This process is repeated until a stopping criterion is met to determine the geometrical metric value.

According to an embodiment, the present invention relates to a radio signal processing system for estimating a geometrical metric between a first radio signal transceiver and a second radio signal transceiver using phase-based measurements and coherence group processing, the system comprising:
a) A first radio signal transceiver, the first radio signal transceiver comprising:
   ➢ A wireless communication unit, the wireless communication unit being configured to send and receive data to a second radio signal transceiver;
   ➢ A memory unit, the memory unit being configured to store data and a computer product program ;
   ➢ A processing unit, the processing unit being configured to:
      ▪ Acquire at least one first set of measurement results;
      ▪ Define at least one coherence group;
      ▪ Construct at least one grid of candidate geometrical metric values; .
      ▪ Select input data, the input data comprising the first set of measurement results;
      ▪ Applying a deflation loop on the first set of measurement results (PCT), by the processing unit of the initiator radio signal transceiver, the application of a deflation loop comprising:
         I. Computing a pseudo-spectrum indexed by the geometrical metric values in the grid, using scalar products, preferably made group per group; and
         II. Finding the geometrical metric value corresponding to the pseudo-spectrum maximum; and
         III. Estimating the contribution of this candidate geometrical metric value; and
         IV. Generating new input data by removing the estimated contribution from the input data;
         V. Repeating steps I to IV on the new input data until a stopping criterion is met..
b) The second radio signal transceiver, the second radio signal transceiver comprising:
   ➢ A wireless communication unit, the wireless communication unit being configured to send and receive data to the first radio signal transceiver;
   ➢ A memory unit, the memory unit being configured to store data and instructions;
   ➢ A processing unit, the processing unit being configured to execute instructions.

According to an embodiment, the present invention relates to a radio signal processing system designed to estimate geometrical metrics between a first radio signal transceiver and a second radio signal transceiver through phase-based measurements and coherence group processing. This system comprises a first radio signal transceiver and a second radio signal transceiver, each equipped with essential components for data communication and processing.

The first radio signal transceiver includes a wireless communication unit responsible for sending and receiving data to the second radio signal transceiver. Additionally, it has a memory unit for storing data and at least one computer program, and a processing unit that performs various tasks. The processing unit acquires a set of measurement results, defines coherence groups, constructs grids of candidate geometrical metric values, selects input data, applies deflation loops to each candidate value, and generates new input data based on the estimated contributions.

The technical advantage of using phase-based measurements lies in its ability to provide accurate information about the phase difference between transmitted and reflected signals, which is crucial for estimating geometrical metrics. Coherence group processing, on the other hand, allows for efficient handling of large data sets by grouping similar data points together, reducing computational complexity and improving processing speed. The deflation loop process involves computing pseudo-spectra using coherence group-wise correlations and/or scalar products to find the maximum correlation between candidate geometrical metric values and input data. This method helps in estimating the contribution of each candidate value, which is then used to generate new input data for further processing. Repeating this process until a stopping criterion is met ensures that the estimated candidate value corresponds to the actual geometrical metric.

The second radio signal transceiver also includes essential components such as a wireless communication unit, a memory unit, and a processing unit. Its processing unit executes instructions received from the first radio signal transceiver to perform various tasks. The technical advantage of this design lies in its ability to facilitate bidirectional data communication between the two transceivers, enabling more efficient and accurate estimation of geometrical metrics.

In summary, the present invention offers a radio signal processing system that utilizes phase-based measurements and coherence group processing for estimating geometrical metrics between two radio signal transceivers. The use of deflation loops and bidirectional data communication enhances accuracy, efficiency, and flexibility in estimating these metrics.

Before providing below a detailed review of embodiments of the technology, some optional characteristics that may be used in association or alternatively will be listed hereinafter:
According to an example, the final estimated geometrical metric value is the minimal value among the set of candidate geometrical values.

According to an example, the first radio signal transceiver is an initiator radio signal transceiver, and the second radio signal transceiver is a reflector radio signal transceiver.

According to another example, the first radio signal transceiver is a reflector radio signal transceiver, and the second radio signal transceiver is an initiator radio signal transceiver.

According to an embodiment, a coherence group is a subset of measurements, and all the coherence groups constitute a partition of all the measures.

According to an embodiment, partitioning measurements into coherence groups corresponds to assigning an integer index to each visited frequency, each index corresponding to a result from a consistent calculation.

According to an example, said geometrical metric is a distance, preferably the shortest distance, between said first radio signal transceiver and said second radio signal transceiver.

According to an example, said candidate geometrical metric value is the minimum distance corresponding to the shortest path between said first radio signal transceiver and said second radio signal transceiver.

According to an example, said first radio signal transceiver comprises at least one antenna or an array of antennas, each antenna of said array of antennashaving a predetermined position. According to an example, said second radio signal transceiver comprises at least one antenna or an array of antennas, each antenna of said array of antennas having a predetermined position. According to an example, said geometrical metric is at least one angle of arrival between said first radio signal transceiver and said second radio signal transceiver.

According to an example, said angle of arrival is determined using distance differences between each antenna of said array of antennas and said second radio signal transceiver.

According to an example, said candidate geometrical metric value is calculated using the minimum distance corresponding to the shortest path between said second radio signal transceiver and each of the antennas of said array of antennas.

By employing an array of antennas, the system can capture radio signals from various angles and directions, thereby increasing the accuracy and reliability of determining the angle of arrival between the initiator and reflector transceivers. This is particularly useful in complex environments where multiple reflections or interferences may occur. The predetermined positions of the antennas in the array ensure consistent and repeatable measurements, enabling the system to reliably calculate the angle of arrival between the initiator and reflector transceivers. This is useful for applications where precise positioning information is required, such as in navigation systems or location-based services. By calculating the angle of arrival based on distance differences between each antenna and the reflector transceiver, the system can determine the direction of the incoming radio signal more accurately than by relying on a single antenna measurement. This is because the distance differences provide additional information about the position of the reflector relative to the initiator transceiver, which can be used to improve the accuracy of the angle calculation.

According to an example, said stopping criterion is a power lower than a predetermined power threshold. Preferably, the predetermined power threshold can be computed based on estimated power contributions.

Setting a power threshold for candidate geometrical metric values helps filter out unreliable signals, reducing the likelihood of false positives and improving the overall performance of the system. This is useful in environments where there may be significant interference, multi-paths or noise, as it allows the system to focus on consistent signals that are more likely to correspond to valid direct signals.

According to an example, said vector of complex-valued data comprise at least the following vectors:
∘ {*P*(*k*)}: said vector comprising, for each frequency of said predetermined list of frequencies, the product of the measurements made on said first radio signal transceiver and said second radio signal transceiver, P being an estimate of the 2-way frequency response at each frequency of said predetermined list of frequencies;
∘ {*fₖ*}: said vector comprising, for each frequency of said predetermined list of frequencies, data related to said frequency;
∘ {*gₖ*}: said vector comprising said at least one coherence group, the measurement results belong to.

By using the product of measurements taken on both the first and second radio signal transceivers, the estimated 2-way frequency response (P) at each predetermined frequency is obtained. This improves the accuracy of the analysis as it takes into account the interaction between the initiator and reflector signals, which can significantly impact the overall system performance.

The inclusion of a vector containing data related to each frequency in the predetermined list allows for a more comprehensive analysis of the system response at different frequencies. This enhanced frequency selectivity is useful in applications where precise characterization of the system behavior across a wide frequency range is required.

According to an example, the present invention is configured to use values derived from frequencies to ease computation for computing units with a reduced set of instructions.

The incorporation of a vector containing at least one coherence group measurement results enables the identification and analysis of coherent signals within the system. Coherence groups are useful in understanding complex systems, as they represent groups of frequencies for which results exhibit a consistent phase relationship. This information can be used to optimize system performance or diagnose issues related to device motion, propagation channel evolutions, or signal synchronization. According to an example, said geometrical metric is a distance and wherein, for each candidate geometrical metric value in said grid, said pseudo-spectrum is a sum of coherence group-wise correlations between at least one measurement result and at least one expected measurement result corresponding to the candidate geometrical metric value as follow: $S \left(b\right) = {\sum }_{g = 0}^{G - 1} \left({\left‖{\sum }_{q = 0}^{{Q}_{g} - 1} P \left({k}_{g , q}\right) {e}^{2 jπ \frac{2 {d}_{b} {f}_{{k}_{g . q}}}{c}}\right‖}^{2}\right)$ Where:
- b is the index in the candidate geometrical metric value grid,
- *G* is the number of coherence groups
- *Q_{g}* is the number of steps belonging to coherence group g
- *k_{g,q} is the q-th measurement results index in group g*
- *d_{b} is the geometrical metric value corresponding to index b, in meters*
- *f_{kg,q} is the radio frequency channel of step k_{g,q}, incremented each MHz*
- *P*(*k_{g,q}*) *is the 2-way PCT of index k_{g,q}: on group index g and in-group index q*
- *c* is the wave propagation speed (light speed) in meters per microsecond

One of the benefits of using these coherence groups is to avoid the possibly destructive effect of computing a coherent correlation on all data when the data itself is not coherent over all measurements.

The averaging of correlations within coherence groups helps to filter out potential outliers and errors in the measurements. By summing the correlations, any individual measurement result with a large error or outlier value will have less impact on the overall pseudo-spectrum, ensuring more robust and accurate results.

According to an example, the list of predetermined frequencies can comprise several times the same frequencies.

According to an example, said step has a size chosen to be equal to $\frac{c}{{2}^{J}}$ m, where c is the wave propagation speed in meters per microsecond, J is an integer, and wherein the minimum value of J is higher or equal to 8, preferably equal to 9.

According to an example, said geometrical metric is at least one angle of arrival, and said first set of measurement results comprises a set of *Nₐ* measurement results, where *Nₐ* is the number of antennas of said first radio signal transceiver and wherein, for each candidate geometrical metric value in said grid, said pseudo-spectrum is as follow: $S \left(Θ\right) = {\sum }_{a = 0}^{{N}_{a} - 1} P \left(a\right) {e}^{- i \vec{{k}_{Θ}} . \vec{{d}_{a}}}$ Where:
- *P*(*a*) is a measurement from a constant tone extension
- k̅_̅{̅Θ̅}̅ is the wave vector: $\vec{{k}_{Θ}} = \frac{2 πf \vec{{u}_{Θ}}}{c}$, where u̅_̅{̅Θ̅}̅ is the unit vector in the considered direction Θ.
- *̅d̅ₐ̅*̅ is the position vector of the antenna *̅d̅ₐ̅*̅ = *O̅M̅ₐ̅,* where *O* is the center of said array of antennas and *Mₐ* is the position of the antenna.

According to an example, estimating the contribution of said candidate geometrical metric value comprises:
- Calculating a search vector *αₙ* of *G* complex values, one per coherence group: *αₙ*(*g*), g = 0 to G;
- Computing said contribution for each coherence group, as follow:
${α}_{n} \left(g\right) = {\sum }_{q = 0}^{{Q}_{g} - 1} P \left({k}_{g , q}\right) {P}_{{\hat{d}}_{n}}^{*} \left({k}_{g , q}\right)$

Which corresponds to the scalar product of the sub-vectors of the measurement (*P*) and the reference (*P_{d̂ₙ}*) considering the geometrical metric value *d̂ₙ* estimated at iteration *n*, corresponding to group g, and *αₙ*(*g*) is a complex value.

According to an example, removing the contribution of at least one candidate geometrical metric value comprises: Removing the estimated contribution from the input data, term by term, for each coherence group g and each index q belonging to this group, as follow: $P \left({k}_{g , q}\right) ← P \left({k}_{g , q}\right) - {α}_{n} \left(g\right) {P}_{{\hat{d}}_{n}}^{*} \left({k}_{g , q}\right)$

By removing the contribution of at least one candidate geometrical metric value term by term for each coherence group and index, this method ensures a more precise analysis within the coherence group. Removing the contribution of at least one candidate geometrical metric value for each coherence group and index can help improve the robustness of the analysis against noise and mainly multi-paths signals. By filtering out potentially misleading data points, this method can provide more reliable results and reduce the impact of unwanted variations on the overall analysis.

The method's ability to remove the contribution of specific geometrical metric values term by term for each coherence group and index allows for efficient handling of large data sets. By focusing on individual data points and their contributions, this approach can help minimize computational requirements and enable faster analysis of extensive datasets.

According to an example, said stopping criterion is based on the number of iterations of the deflation loop.

According to an example, said stopping criterion is based on the contribution power: ${A}_{n} = {\sum }_{g = 0}^{G - 1} {Q}_{g} . {\left|{α}_{n}\left(g\right)\right|}^{2}$

According to an example, said stopping criterion is met if:
- The number of iterations is higher than a predetermined number of iterations, or
- The last power contribution of the new input data is lower than a predetermined number *β* times the first power contribution of the input data.

According to an example, the present invention comprises a step of recording the estimated contribution of each candidate geometrical metric values during the application of the deflation loop. According to an example, after applying the deflation loop, the present invention comprises calculating a threshold based on the recorded estimated contribution of the candidate geometrical values.

According to an example, in response to meet the stopping criterion, the present invention comprises a step of selecting a set of estimated contributions, each estimated contribution of this set of estimated contributions being greater than the calculated threshold.

According to an example, the present invention comprises a step of determining the smallest geometrical metric value among the geometrical metric values of the set of estimated contributions. According to an example, estimating the contribution of said candidate geometrical metric value comprises estimating a path distance using a 2-steps maximum search, said 2-steps maximum search comprising:
- a first search step performed on a fixed geometrical metric value grid, preferably with a resolution higher than 1m, preferably 0.5m;
- a second search step performed in the neighbourhood of the first estimated maximum, to obtain an accurate estimate of the strongest path of the iteration on said input data.

The first technical advantage of the 2-steps maximum search method lies in its ability to efficiently estimate the contribution of a candidate geometrical metric value by performing an initial coarse search on a fixed grid. For example, the grid resolution must be finer than the peaks' expected width. This step allows for a rapid identification of potential maxima, reducing the computational effort required compared to exhaustive searches.

The second technical advantage comes from the refinement of the estimate obtained in the first search step through a localized second search step. By focusing the search in the vicinity of the initial maximum, this approach ensures a more accurate estimation of the strongest path on the input data. Another technical advantage is the flexibility of the method, as it allows for the use of a resolution higher than 0.5m in the initial fixed grid search step. This adaptability caters to various application requirements and can lead to more precise results when dealing with data that exhibits fine-grained geometrical metric variations.

Lastly, the 2-steps maximum search method is computationally efficient as it reduces the number of searches required compared to traditional methods. By performing an initial coarse search followed by a localized refinement, the overall computational cost is minimized while maintaining accuracy and reliability. This efficiency can be crucial in applications where large datasets or real-time processing are essential.

According to an example, the refinement step comprises a computation based on a maximum of the pseudo-spectrum and its 2 neighbors.

According to an example, estimating the contribution of said candidate geometrical metric value comprises:
- Finding the maximum of a pseudo-spectrum on the input data;
- Extracting said maximum value and the values of the two neighbors immediately at left and right of said maximum;
- Computing the maximum position of a 2^{nd} order polynomial passing through the said maximum value and said two neighbors, as this polynomial is configured to approximate the underlying pseudo-spectrum curve.

By finding the maximum of a pseudo-spectrum and using a 2^{nd} order polynomial to approximate the underlying curve, this method enhances the accuracy in estimating the contribution of candidate geometrical metric values. The polynomial fitting provides a more precise representation of the local spectral characteristics, leading to better estimation results. Specifically, the underlying curve, in this 3-points interval, is smooth enough to be approximated by such a polynomial.

Extracting the maximum value and its neighbors from the input data allows for the rejection of outliers and noise points. The 2^{nd} order polynomial approximation is less sensitive to small variations in the data, making this method more robust against noise and distortions present in the input data.

By focusing on local maxima and their neighbors, this method reduces the amount of data processing required compared to analyzing the entire input data set or even compared to applying a similar search algorithm on a finer grid centered on the coarse maximum. Additionally, polynomial fitting is an efficient mathematical technique for approximating functions, making this method computationally efficient in estimating the contribution of candidate geometrical metric values.

According to an example, said acquiring step of said first set of measurement results (PCT) comprises at least a radio frequency channel sounding process comprising:
- Performing a series of tone exchanges on at least one predetermined set of radio frequency channels between said first radio signal transceiver and said second radio signal transceiver, wherein each radio signal transceiver among said first radio signal transceiver and said second radio signal transceiver is configured to:
   ∘ measure at least the phase, and the magnitude of at least one received incoming tone; and
   ∘ correct said phase with its own transmitted phase; and
   ∘ Obtain an estimate of the forward/backward channel frequency response estimate.

By performing a series of tone exchanges on predetermined radio frequency channels and measuring the phase and magnitude of received incoming tones, each radio signal transceiver can correct its phase with its own transmitted phase. This process leads to more accurate forward/backward channel frequency response estimates, which is useful for reliable wireless communication systems.

The present inventionenables better interference mitigation.

According to an example, the range for distance estimation is chosen between 0 to 150m or a value determined by third-party information.

According to an example, the range for angle of arrival estimation is chosen based on the directivity of an antenna array of said first radio signal transceiver, with default values of 0 to 180 degrees for linear arrays or 0 to 90 degrees for planar arrays.

According to an example, the present invention comprises at least one array of antennas.

An array of antennas enables beamforming techniques, which focus the radiated energy towards a specific direction. This results in increased signal strength and reduced interference from other sources, leading to enhanced communication range and quality.

According to an example, said first radio signal transceiver comprises at least one array of antennas.

### Brief description of the drawings

For a better understanding of the present technology, as well as other aspects and further features thereof, reference is made to the following description which is to be used in conjunction with the accompanying drawings, where:
FIG. 1: Figure 1 illustrates the sequence of steps involved in a method (100) according to an embodiment of the present invention.
FIG. 2: Figure 2 illustrates a system according to an embodiment of the present invention.
FIG. 3: Figure 3 illustrates a scenario where a pseudo-spectrum and a pseudo spectrum analysis function may not be effective, according to an embodiment of the present invention.
FIG. 4: Figure 4 illustrates an iterative deflation loop according to an embodiment of the present invention.
FIG. 5: Figure 5 illustrates measurement results PCT at a distance of 5m according to an embodiment of the present invention.
FIG. 6: Figure 6 illustrates the correlation pseudo spectrum of the measurement results of figure 5 according to an embodiment of the present invention.
FIG. 7: Figure 7 illustrates the shape of the pseudo-spectrum curve in an embodiment of the present invention, with a maximum at 12.5m and a smallest significant visible maximum being approximately less than 10m while the actual distance is 10m.
FIG. 8: Figure 8 illustrates the evolution of the pseudo-spectrum curve of figure 7 in an iterative process, with a maximum at 15m and a null removal at 12.5m according to an embodiment of the present invention.
FIG. 9: Figure 9 illustrates the evolution of the pseudo-spectrum curve of figure 8 in an iterative process, with a maximum at the actual distance of 10m according to an embodiment of the present invention.
FIG. 10: Figure 10 illustrates the process of channel sounding in a multi-antenna system according to an embodiment of the present invention.
FIG. 11: Figure 11 illustrates a methodology of dividing measurements into distinct coherence groups according to an embodiment of the present invention.
FIG. 12: Figure 12 illustrates the pseudo spectrum circles centered on its maximum value, along with an approximation polynomial curve, according to an embodiment of the present invention.

### Detailed description

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As person skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present technology.

According to an embodiment, the present invention relates to a method and system for estimating geometrical metrics (distance and/or angle, for example) between radio frequency devices using phase-based measurements, one being called an initiator and the other one a reflector. Preferably, the present invention is configured to define at least one coherence group based on criteria such as the instant of measurement, application type, and device motion. A grid of candidate metric values is advantageously constructed, and for each candidate, a pseudo spectrum value can be computed using coherence group-wise correlations or scalar products. According to an embodiment, the maximum correlation is found, and the corresponding contribution is estimated and removed. This process is repeated until a stopping criterion is met.

Advantageously, a coherence group is a set of measurements that are expected to be coherent with each other. Coherence groups are preferably determined prior to the execution of the algorithm and are used to improve the accuracy and robustness of the distance estimation.

According to an embodiment, the criteria for defining a coherence group can vary depending on the specific application and environment. For example, in a scenario where devices are moving rapidly or where there is significant interference between antennas, it may be necessary to define multiple coherence groups based on both time and antenna path.

Advantageously, once the coherence groups have been defined, a grid of candidate metric values (distance and/or angle) is constructed. Preferably, for each candidate value, a pseudo spectrum value is computed using coherence group-wise correlations and/or scalar products. The correlation between the measured data and the expected data for the candidate metric value is calculated for each coherence group.

Advantageously, each pseudospectrum value is computed as the sum over coherence groups of (the squared magnitude of) the scalar products within each coherence group.

The corresponding contribution is then estimated and removed from the input data. This process is repeated until a stopping criterion is met, such as a predetermined number of iterations or a minimum correlation threshold being reached or a power threshold is reached.

According to an embodiment, each contribution is estimated using a 2-steps (coarse/fine) approach to significantly save computations. The first step involves estimating the contribution using a coarse approach, and the second step involves refining the estimate using a fine approach. This 2-step approach allows for the estimation of contributions that may have been shadowed by stronger contributions in previous iterations.

The present invention is particularly useful in applications where distance estimation between moving devices is required, such as in Bluetooth channel sounding or even other kinds of radio frequency technologies. The present invention can be used to estimate both distance and angle between devices, separately or in the same process, and using one antenna and/or an antenna array.

In the context of Bluetooth channel sounding, for example, the present invention can use a set of measurements obtained from each device for each visited RF channel and antenna path. These measurements are represented by vectors containing the product of the measurements made on initiator and reflector devices, the channel number at which the step was run, and the coherence group the measurement belongs to.

Advantageously, the present invention uses a pseudo-spectrum function that is simple to compute and produces clear maxima, allowing for the estimation of the smallest significant maximum corresponding to the actual distance or angle, at least indirectly. The algorithm also handles the multipath issue through an iterative approach where contributions are successively estimated and removed from the input data so that shadowed contributions can be estimated.

The method is computationally efficient as it only requires complex rotations and sums (scalar products with basis complex exponentials), excluding complex algebraic computations like eigenanalysis. It is also well-suited to fixed point implementation, making it ideal for low power applications.

Compared to previous works in the field, this method has several advantages. It uses a stopping criterion based on coherence groups that makes it more robust to channel variations during procedure duration. It also does not require complex eigenanalysis on large matrices and is well-suited to fixed point implementation. In the present invention, at each iteration, only the maximum pseudo-spectrum value needs to be found, whereas non iterative methods willing to overcome propagation issue require more advanced pseudospectrum variation analyses. The algorithm has been shown to perform better than a reference MUSIC algorithm in many cases, as it can better "see" shadowed paths. The invention can be implemented in various forms, including as a software component or as part of a hardware system. It can also be used in combination with other technologies, such as antenna arrays for angle estimation. The present invention is expected to have significant applications in fields such as wireless communications, positioning systems, and sensor networks.

Before describing the present invention in more detail, let's recall some basic principles about phase-based measurements.

As well known by the skilled person in the art, a phase measurement relies on a tone exchange in which each device measures the phase (and magnitude) of the received incoming tone and corrects the phase with its own transmitted phase, in particular in a channel sounding context, for example. Let's denote the channel frequency response as: $G \left(f\right) = \left|G\left(f\right)\right| {e}^{{iθ}_{CH} \left(f\right)}$

For a phase measurement step run at frequency *f* and instant *t*, each device (the initiator and reflector) estimates the following value: ${P}_{i} \left(f\right) = G \left(f\right) {e}^{i {Δ}_{lo} \left(t\right)}$ ${P}_{r} \left(f\right) = G \left(f\right) {e}^{- i {Δ}_{lo} \left(t\right)}$

Where subscript *i* stands for initiator (first device to transmit) and *r* for reflector (second device to transmit), and Δ*ₗₒ*(*t*) is the local oscillator (LO) phase difference between devices at instant *t*, which is unknown and can't be estimated or tracked because of the long delay between steps. Because of this "random" phase shift, phase measurement from either the initiator or the reflector do not reflect the actual 1-way channel frequency response *G*(*f*). On the other hand, the product of these two measurements is an estimate for the 2-way channel frequency response: *Pᵢ*(*f*)*Pᵣ*(*f*) = *P*(*f*) = *G*²(*f*), as opposite rotations cancel out.

According to an embodiment, during a procedure, phase measurements are made for different radio frequency channels of the Bluetooth standard (1MHz separated channels in the 2.4GHz ISM band), and the set of 2-way channel frequency response coefficients can be used to estimate distance. According to an embodiment, assuming single path propagation channel, the 1-way frequency response can be written as: $G \left(f\right) = A \left(f, d\right) {e}^{- 2 iπ \frac{df}{c}}$

Where *A* is the (approximately constant in the rather narrow 2.4 GHz ISM band) propagation loss, d is the distance to estimate, and c the propagation speed (speed of light).

Preferably, the 2-way response is then: $P \left(f\right) = {A}^{2} \left(f, d\right) {e}^{- 4 iπ \frac{df}{c}}$

According to an embodiment, a set of measurements of this type at different frequencies can be used to estimate distance using different methods:
- Phase difference between consecutive measurements
- Averaged phase differences, or phase regression
- Super resolution algorithms, like FFT based algorithms

In that case the problem is simple, since we are only trying to estimate one best fitting harmonic component.

Now, let's discuss the case of a multi-path propagation channel. In the kind of applications targeted by channel sounding, like car key applications, the single path assumption is hardly met in real life. In that case, a multipath model is better adapted: $G \left(f\right) = {\sum }_{m = 0}^{M - 1} {A}_{m} \left(f\right) {e}^{- 2 iπ \frac{{d}_{m} f}{c}}$

Where M is the number of propagation paths, and each path m has its own loss and distance/delay. The actual distance corresponds to the smallest path if a line of sight (LOS) path exists. Otherwise, the smallest distance will be the best distance estimate that can be obtained.

Then the 2-way response is: $P \left(f\right) = {\sum }_{m 1 = 0}^{M - 1} {\sum }_{m 2 = 0}^{M - 1} {A}_{m 1} \left(f\right) {A}_{m 2} \left(f\right) {e}^{- 2 iπ \frac{\left({d}_{m 1}+{d}_{m 2}\right) f}{c}}$

In that case, each response coefficient at frequency *f* is a sum of contributions from different paths. In the case of 1-way response, there are M contributions, the same as the number of propagation paths. In the case of 2-way response, there are *M*² contributions (either actual or artificially created by cross products), making it more difficult to estimate the smallest LOS path.

As well known by the skilled person in the art, the channel sounding feature targets support for distance estimation between moving devices, with relative radial speed up to 5 km/h. This means that distance can vary significantly during a procedure and so can the phase shift induced by distance. The standard specifies that a procedure can be split into several subevents which can be separated by several milliseconds and even tens of milliseconds. In the case of two measurements separated by 10ms at maximum speed, the 1-way frequency response can shift by 40°. Algorithms using response variation global analysis are little robust to that effect.

The number of measurements depends on the number of steps in the procedure, which is negotiated prior to the procedure between the two devices. Many factors can influence this number, such as step length (which itself depends on many factors), maximum procedure length, presence of other BT activities... Therefore, it is much likely that a procedure will have limited measurements, and that not all RF channels will be visited during a procedure. According to an embodiment, the present invention takes this into account. Specifically, any algorithm assuming a linear channel grid should not be used, and care must be taken when using prior art algorithm based on RF channel intercorrelation such as MUSIC.

According to an embodiment, the present invention is configured to estimate distance and/or angle, based on a set of 2-way frequency response coefficients, that can mitigate both the multipath propagation effect and the channel coherency issue.

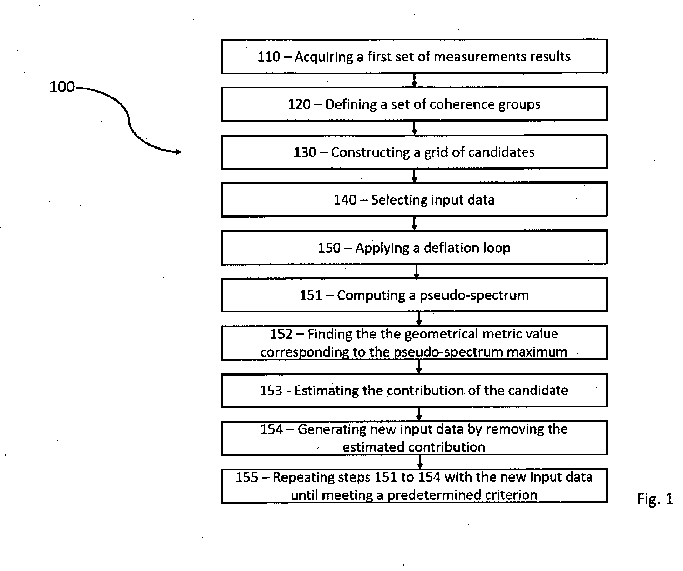

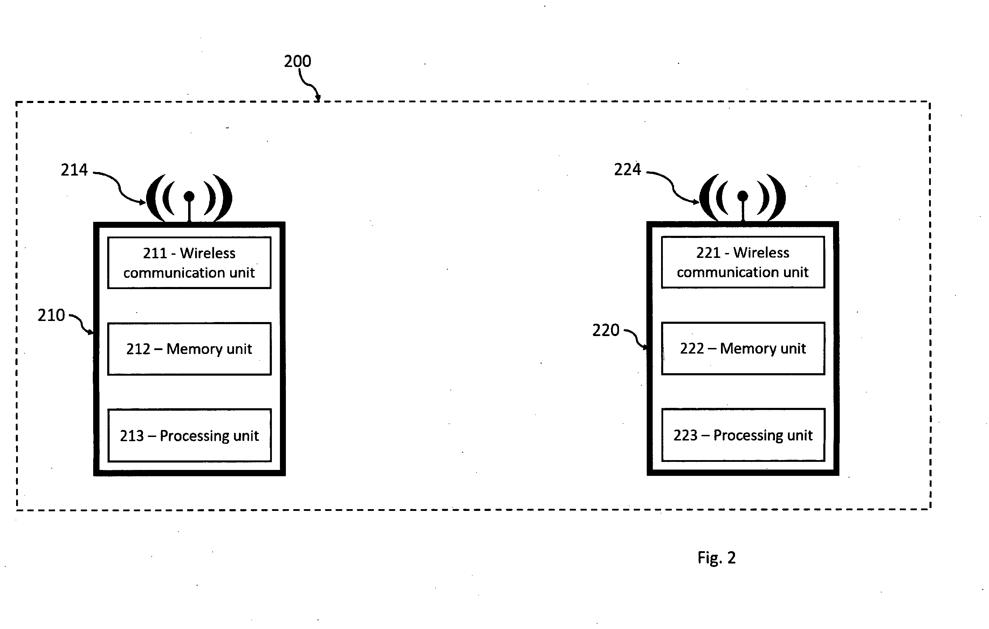

According to an embodiment, and as illustrated by figures 1 and 2, the present invention relates to a method 100 and a system 200 for estimating at least one geometrical metric between a first radio signal transceiver 210 and a second radio signal transceiver 220. The method 100 utilizes preferably phase-based measurements. The method 100 utilizes advantageously coherence group processing. According to an embodiment, the method 100 is configured to be executed by at least one radio signal processing system 200 comprising at least said first radio signal transceiver 210 and said second radio signal transceiver 220.

As described hereafter, each of the first radio signal transceiver 210 and said second radio signal transceiver 220 comprise a wireless communication unit, a memory unit, a processor unit, and an antenna.

According to an embodiment, the method 100 comprises the following steps:
a. Acquiring 110, by at least said first radio signal transceiver 210, at least a first set of measurement results (PCT), said first set of measurement results (PCT) comprising at least one set of 2-way frequency responses, said set of 2 -way frequency responses comprising at least one measured 2-way frequency response for each frequency of a predetermined list of frequencies, each of these 2-way frequency responses comprising vectors of complex-valued data;
b. Defining 120, by at least one processing unit 213 of said first radio signal transceiver 210, at least one coherence group, said coherence group comprising at least said first set of measurement results (PCT), said first set of measurement results (PCT) comprising:
   - Results of measurements taken at the same time frame; and/or
   - Results of measurements taken during the same application running on at least one among said first radio signal transceiver and said second radio signal transceiver; and/or
   - Results of measurements taken when at least one radio signal transceiver among said first radio signal transceiver and said second radio signal transceiver is stationary or moving at a certain speed regarding the at least another radio signal transceiver taken among said first radio signal transceiver and said second radio signal transceiver; and/or
   - Results of measurements from the same pair of antennas, preferably one from each radio signal transceiver taken among said first radio signal transceiver and said second radio signal transceiver;
c. Constructing 130, by said processing unit 213 of said first radio signal transceiver 210, at least one grid of candidate geometrical metric values;
d. Selecting 140 input data, said input data comprising at least said first set of measurement results (PCT);
e. Applying 150 a deflation loop for each candidate geometrical metric value in said grid, using said processing unit 213 of said first radio signal transceiver 210, said application of a deflation loop comprising:
   i. Computing 151 at least one pseudo-spectrum using coherence group-wise correlations and/or scalar products; and
   ii. Finding 152 the maximum correlation; and
   iii. Estimating 153 the contribution of said candidate geometrical metric value; and
   iv. Generating 154 new input data by removing said estimated contribution from said input data;
   v. Repeating 155 steps i 151 to iv 154 on said new input data until at least one stopping criterion is met,
f. when said stopping criterion is met, the final estimated geometrical metric value is selected among the set of candidate geometrical values, and preferably the estimated geometrical metric value is the minimal value.

As illustrated by figure 1, the method begins with the acquiring 110 of at least a first set of measurement results (PCT) by the first radio signal transceiver 210. This first set of measurement results comprises at least one set of 2-way frequency responses. Preferably, the first radio signal transceiver 210 is configured to define 120 at least one coherence group. This coherence group comprises the first set of measurement results (PCT). Advantageously, the first radio signal transceiver 210 constructs at least one grid of candidate geometrical metric values. The input data for this process comprises the first set of measurement results (PCT).

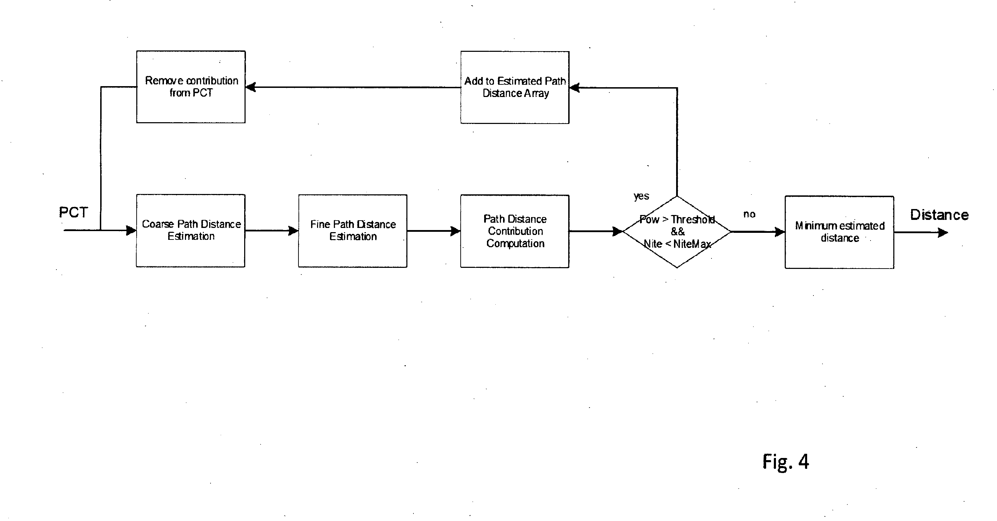

According to an embodiment, and as illustrated by figure 4 and described hereafter, the method applies a deflation loop for each candidate geometrical metric value in the grid. The application of a deflation loop comprises preferably computing at least one pseudo-spectrum using coherence group-wise correlations and/or scalar products. The maximum correlation is then found, and the contribution of the candidate geometrical metric value is estimated and removed from the input data. Advantageously, the method 100 repeats 155 steps i 151 to iv 154 on the new input data until at least one stopping criterion is met. When this stopping criterion is met, the final estimated geometrical metric value is selected among the set of candidate geometrical values.

In more detail, and according to an embodiment, the method 100 begins by acquiring 110 a first set of measurement results (PCT) by the first radio signal transceiver. This first set of measurement results comprises at least one set of 2-way frequency responses, with each set containing vectors of complex-valued data for each frequency of a predetermined list of frequencies. The first radio signal transceiver 210 then defines 120 at least one coherence group. This coherence group includes the first set of measurement results. (PCT). Said first set of measurement results comprises preferably results of measurements taken at the same time frame, during the same application running on at least one among the first radio signal transceiver 210 and reflector 220 radio signal transceivers, and/or results of measurements taken when at least one radio signal transceiver is stationary or moving at a certain speed regarding the other radio signal transceiver taken among the first radio signal transceiver 210 and reflector 220 radio signal transceivers. Additionally, this first set of measurement results may comprise results of measurements from the same pair of antennas, preferably one from each radio signal transceiver.

The first radio signal transceiver 220 constructs 130 at least one grid of candidate geometrical metric values. This grid includes several possible values, preferably all possible values, for the geometrical metric that the method 100 may estimate.

The method 100 then is configured to select 140 input data, which comprises the first set of measurement results (PCT), and applies 150 a deflation loop on the first set of measurement results (PCT). This application 150 of a deflation loop includes computing 151 at least one pseudo-spectrum indexed by the geometrical metric values in the grid, using scalar products, preferably made group per group. The pseudo-spectrum maximum is found 152, along with the corresponding candidate geometrical metric value. This candidate geometrical value is stored, and the contribution of this candidate is estimated 153 and removed 154 from the input data. The method 100 is configured to repeat steps i 151 to iv 154 on the new input data until at least one stopping criterion is met. When this stopping criterion is met, the final estimated geometrical metric value is derived from the list of stored geometrical metric values. According to an embodiment, in each deflation loop iteration, the pseudo-spectrum is computed, the pseudo-spectrum is a vector containing all the pseudo-spectrum values, each corresponding to a candidate distance. Then the maximum value of the pseudo-spectrum is found, and the corresponding candidate distance (since the pseudo-spectrum abscissa contains the grid of candidate distances) is added to a list of estimated path distances. Then this last estimated path distance's contribution is removed from the current PCT.

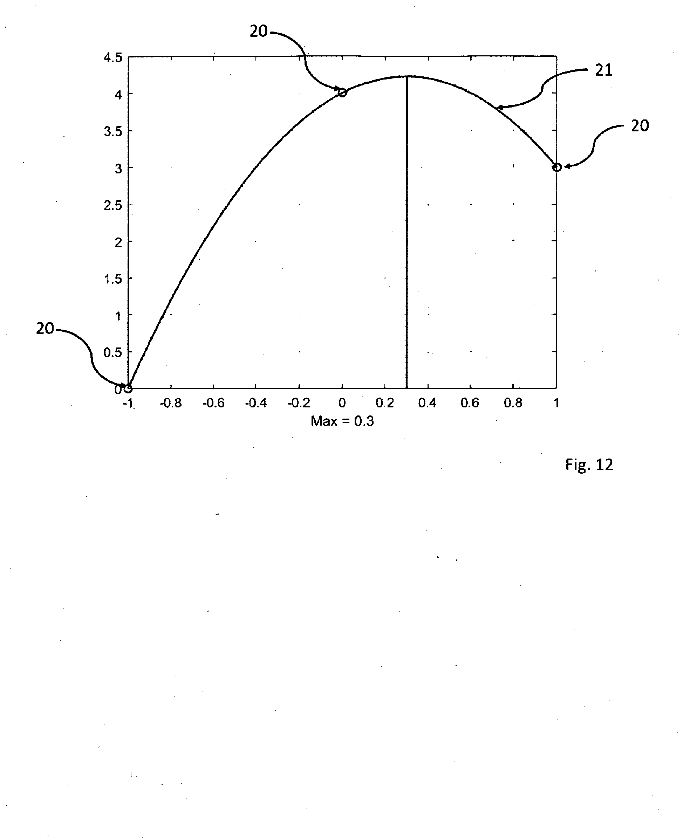

The method 100 may employ different stopping criteria, such as a maximum number of iterations or a contribution power threshold. The method 100 may also use different solutions for estimating the candidate geometrical metric value, such as no refinement, refinement using a finer grid, or the currently implemented solution that uses a 2^{nd} order polynomial approximation of the underlying pseudo-spectrum curve, see for example figure 12 and its description hereafter.

According to an embodiment, a coherence group is a set of PCT measurements. Within each coherence group, measurements are expected to be coherent, so that the computed criterion (scalar product aka inner product aka dot product) makes sense. According to an embodiment, let's assume that the following measurements cannot be coherent from one another:
- Measurements taken at distant times: when the scenario includes mobility
- Measurements taken from different antenna paths.

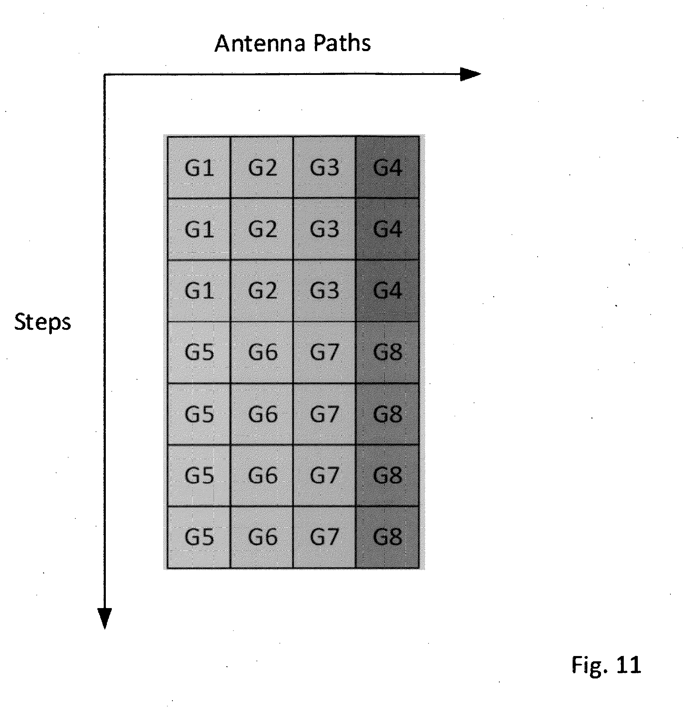

According to an embodiment, these measurements can be split into different coherence groups. A typical example is given in figure 11: In this figure, and according to an example, there are 8 coherence groups. PCTs are split on a time criterion between these groups according to a set of predetermined rules, for example between a first group G1 to G4 and a second group G5 to G8. Within PCTs from a same time interval, PCTs are split based on their antenna path, between different sub-groups from G1 to G4 and from G5 to G8.

According to an embodiment, the invention uses channel sounding for distance estimation between moving devices. Channel sounding is a feature of future Bluetooth 6.0 "Atlanta" which provides measurement data that can be used to estimate distance but does not describe the way to perform the estimation itself. The method iteratively estimates each linear component by finding the one with the maximum correlation with the residual PCT over a set of tested distances. According to an embodiment, the present invention can be implemented within Channel Sounding solutions, preferably to complete ranging based on raw measurements.

Advantageously, the present invention simplifies computations as it eliminates the need for complex algebraic operations such as eigenanalysis for pseudo-spectrum calculation or handling multipath issues. Compared to more intricate algorithms like MUSIC, for example, this invention reduces complexity since it avoids large matrix eigenanalysis and optimization techniques. Furthermore, the present invention offers efficient computation through a two-step approach for contribution estimation. This invention includes advantageously coarse and fine steps that streamline the process and enhance overall system performance.

According to an embodiment, the present invention comprises determining a geometrical metric between a first radio signal transceiver 210 and a second radio signal transceiver 220. Preferably, this geometrical metric is a distance, specifically the shortest distance, between the two transceivers 210 and 240. Additionally, the present invention can comprise evaluating a stopping criterion, which can be a power level lower than a predetermined power threshold, for example. Furthermore, the minimum distance corresponding to the shortest path between the first radio signal transceiver 210 and reflector 220 radio signal transceivers is identified as the candidate geometrical metric value. Advantageously, by determining the shortest distance and evaluating the power criterion, the present invention can effectively filter out contributions from unsuitable propagation paths and focus on those that are most likely to provide the real geometrical metric value.

According to an embodiment, the first radio signal transceiver 210 can comprise at least one array of at least one antenna and/or multi-antennas 214. Each antenna 214 in the array has a predetermined position. Each antenna 214 of the multi-antennas has a predetermined position.

According to this embodiment, the geometrical metric is defined as at least one angle of arrival between the first radio signal transceiver 210 and second radio signal transceiver 220. This angle of arrival can be determined using distance differences between each antenna 214 in the array and the second radio signal transceiver 220. Preferably, the criterion for selecting a candidate geometrical metric value is a power level lower than a predetermined power threshold. The candidate geometrical metric value is calculated based on the minimum distance corresponding to the shortest path between the second radio signal transceiver and each antenna in the array.

Advantageously, using an array of antennas with predetermined positions allows for improved accuracy in determining the angle of arrival between the initiator and second radio signal transceivers. The power threshold ensures that only weak signals are considered as potential candidates for further analysis. Calculating the candidate geometrical metric value based on the minimum distance provides a more efficient method for identifying the optimal reflection path.

Preferably, the first radio signal transceiver 210 and second radio signal transceiver 220 communicate using radio waves. The antennas in the array may be omnidirectional or directional, depending on the specific application requirements. The predetermined positions of the antennas may be determined based on factors such as the size and shape of the array, the desired coverage area, and the frequency of operation.

According to an embodiment, the present invention utilizes complex-valued data vectors, which include at least three distinct vectors.

Preferably, the first vector {*P*(*k*)} comprises, for each frequency of a predetermined list of frequencies, the product of measurements made on a first radio signal transceiver and a second radio signal transceiver. This vector, denoted as P, represents an estimate of the 2-way frequency response at each frequency of the predetermined list.

Advantageously, the second vector {*fₖ*} comprises data related to each frequency of the predetermined list. This information may include various characteristics or properties of the radio signals at those frequencies.

Furthermore, according to an example, the third vector {*gₖ*} comprises measurement results belonging to at least one coherence group. Coherence groups are sets of data points that exhibit a high degree of correlation between them. By analyzing these groups, valuable insights can be gained about the radio signals and their interactions with the environment.

For example, if {*gₖ*} ={1,1,1,1,2,2,2}This would mean:
- There are 7 measurements ({Pₖ) and {fₖ} would have the same size)
- The first 4 Pₖ measurements belong to group 1
- The last 3 belong to group 2

Indeed, according to an embodiment, the present invention is configured to use the following vector inputs:
- {*P*(*k*)}: vector comprising, for each step (equivalently, for each visited RF channel), the product of the measurements made on initiator and reflector devices. P is an estimate of the 2-way frequency response at each visited RF channel.
- {*fₖ*}: vector comprising the channel number at which the step was run. Channel sounding operates in the same band as Bluetooth, RF frequency and channel number are linked by the formula *F*_{(*MHz*)} = *fₖ* + 2402. In regular BT operations, *fₖ* ranges from 0 to 78, and Channel Sounding can operate on all but 7 channels (0, 1, 23, 24, 25, 77, 78), i.e. 72 in total.
- {*gₖ*}: vector comprising the "coherence group" the measurement belongs to. Coherence groups are determined based on criterion such as: instant at which the step has been run, type of application, possibility of motion between devices. In the case of a fast procedure, or when no motion is expected, all measurement may belong the same coherence group. In the case of a procedure split into several short but separated subevents, with motion for example, coherence groups may correspond to subevents.

The use of complex-valued data vectors allows for a more comprehensive analysis of radio signal data, as it captures both magnitude and phase information. Additionally, the inclusion of coherence groups facilitates the identification of patterns and correlations within the data that may not be apparent when considering the whole set of data.

According to an embodiment, the present invention can further comprise several steps for estimating the optimal geometrical metric value from a set of candidates. For example, first, the contribution of each candidate geometrical metric value is estimated and recorded after it has been calculated. Following the application of the deflation loop, a threshold can be calculated based on the recorded estimated contributions of all candidate geometrical values. Upon meeting the stopping criterion, a set of estimated contributions that exceed the calculated threshold can be selected. Finally, the smallest geometrical metric value among the geometrical metric values of the chosen set of estimated contributions can be determined as the final estimated geometrical metric value.

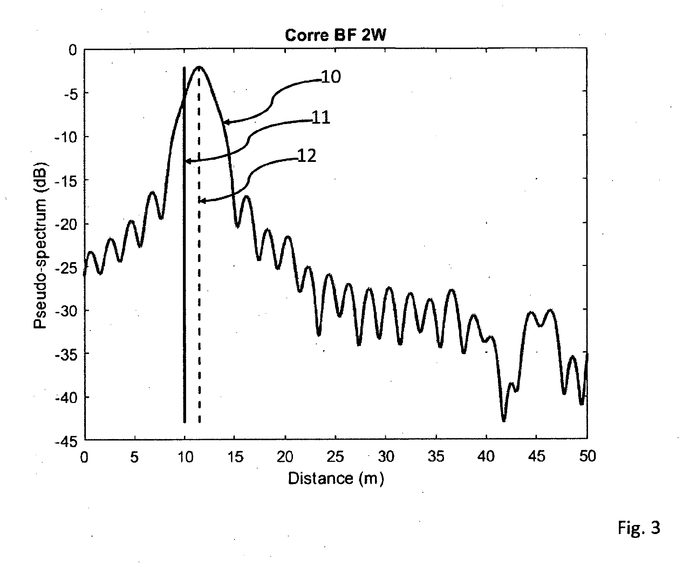

According to an embodiment, Figure 3 illustrates a common error when estimating a distance in the context of the present invention. Figure 3 shows an example of situation where the pseudo-spectrum 10 and its analysis function 12 are not suited, real value being the line 11. In this example, the pseudo-spectrum function is based on "correlation" (more details hereafter). The actual LOS distance is 10m (line 11), but there is a secondary path with 12m. When computing the 2-way frequency response, a cross-product term corresponding to a fake path of 11m is created (dashed line 12) that in this case shadows both actual paths. The task to find the smallest path is a very challenging one.

As discussed hereafter and previously as well, the present invention allows to solve these issues while not requiring complex computations.

Indeed, according to an embodiment, the present invention is configured to use an iterative scheme to deal with different paths: the principle is to compute pseudo-spectrum, find the pseudo-spectrum maximum, remove contribution from this maximum, and iterate until some stopping criterion is met. In this description, the term PCT is used to denote the measured 2-way frequency response at a given step (frequency), which is the term used in the Channel Sounding standard.

According to an embodiment, the deflation loop, also called the "correlation-deflation" step, takes the input PCT, and makes the following multipath assumption for all measurement indices k: $P \left(k\right) = {\sum }_{q = 0}^{P - 1} {\sum }_{p = 0}^{P - 1} {A}_{p} {A}_{q} {e}^{- 2 iπ \frac{2 \left({d}_{p}+{d}_{q}\right) f \left(k\right)}{c}}$

According to an embodiment, aiming at iteratively estimating each linear component, a high-level view of the deflation loop is the following:
- Initialization: residual PCT = input PCT
- For i=1 to maximum number of iterations
- Estimate best linear phase component by finding the one with maximum correlation with the residual PCT over a set of tested distance (=delays)
- Store corresponding distance in array
- If i > 1 and component has power below some threshold relative to 1st found delay
- Break
- Estimate and remove contribution from current component from residual PCT
- Estimated LOS distance is the minimum among stored path distances

Advantageously, the present invention is configured to iteratively "deflate" the PCT from estimated path components, to have a better view of weaker paths, that could have been shadowed by stronger paths in previous iterations. This iterative approach is described in figure 4.

According to an embodiment, let's call *d̂ₙ* the distance estimate at step n of the deflation loop, the one for which the contribution is computed. Let's call *P_{d̂ₙ}* the reference: this vector comprises advantageously the theoretical values of the PCT vector if distance is actually *d̂ₙ* (up to a complex factor), as follow: ${P}_{{\hat{d}}_{n}} \left(k\right) = {e}^{- 2 iπ \frac{2 {\hat{d}}_{n} {f}_{k}}{c}}$

Preferably, the searched contribution is a vector *αₙ* of *G* complex values, one per coherence group: *αₙ*(*g*), *g* = 0 to G. Advantageously, for each coherence group, contribution is computed as follows: ${α}_{n} \left(g\right) = {\sum }_{q = 0}^{{Q}_{g} - 1} P \left({k}_{g , q}\right) {P}_{{\hat{d}}_{n}}^{∗} \left({k}_{g , q}\right)$

Preferably, equation 10 corresponds to the scalar product of the sub-vectors of the measurement (*P*) and the reference (*P_{d̂ₙ}*), corresponding to coherence group g. Advantageously, *αₙ*(*g*) is a complex value.

According to an embodiment, the estimated contribution is a vector with the same size as the input vector. Preferably, the estimated contribution is removed from the current input data, advantageously term by term.

According to an embodiment, for each coherence group g and each index q belonging to this coherence group, the formula is as follow: $P \left({k}_{g , q}\right) ← P \left({k}_{g , q}\right) - {α}_{n} \left(g\right) {P}_{{\hat{d}}_{n}}^{∗} \left({k}_{g , q}\right)$

According to an embodiment, when the geometrical metric is a distance, for each candidate geometrical metric value within the grid, the pseudo-spectrum is calculated as a sum of coherence group-wise correlations. Preferably, the number of coherence groups is defined. Additionally, for each coherence group g, there are a specified number of steps belonging to that group. Preferably, all indices in each coherence group g are used, along with the geometrical metric value corresponding to index b and the radio frequency channel of step. Since the pseudo-spectrum is iteratively deflated with strongest path contribution, the present invention is configured to find the highest contribution in a simple way.

Preferably, for each tested distance in the search grid, the pseudo-spectrum is a sum of coherence group-wise correlations between measurement and the expected measurement corresponding to the tested distance.

Advantageously, said pseudo-spectrum sum can be expressed as follow for each candidate geometrical metric value in the grid: $S \left(b\right) = {\sum }_{g = 0}^{G - 1} \left({\left‖{\sum }_{q = 0}^{{Q}_{g} - 1} P \left({k}_{g , q}\right) {e}^{2 iπ \frac{2 {d}_{b} {f}_{{k}_{g , q}}}{c}}\right‖}^{2}\right)$ Where:
- b is the index in the candidate geometrical metric value grid,
- *G* is the number of coherence groups
- *Q_{g}* is the number of steps belonging to coherence group g
- *k_{g,q}* is the q-th measurement results index in group g
- *d_{b}* is the geometrical metric value corresponding to index b, in meters
- *f_{k_{g,q}}* is the radio frequency channel of step *k_{g,q}*
- *P*(*k_{g,q}*) is the 2way PCT of index *k_{g,q}*: on group index g and in-group index q
- *c* is the wave propagation speed in meters per microsecond

According to an embodiment, the geometrical metric value grid refers to a collection of potential values for the geometrical metric that are being considered for analysis. The coherence groups represent subsets of data within the measurements results (PCTs) that share similar characteristics or properties.

Preferably, by calculating correlations between measurement results and expected results for each candidate geometrical metric value, the present invention can identify strong matches and prioritize them for further investigation. The number of steps belonging to each coherence group determines the granularity of the analysis within that group. A larger number of steps may provide more detailed information but also increase computational complexity. Conversely, a smaller number of steps may result in less detailed information but with reduced computational requirements. For example, the measurement results index refers to a specific data point or value within a given dataset that is being compared against the expected measurement results for a given candidate geometrical metric value and coherence group. The radio frequency channel of step indicates the particular communication frequency used during the data collection process for the step in question. Overall, this method provides a powerful tool for analyzing large datasets by allowing for efficient comparison of candidate geometrical metric values within defined coherence groups using a distance-based metric and correlation analysis, even with limited computation resources

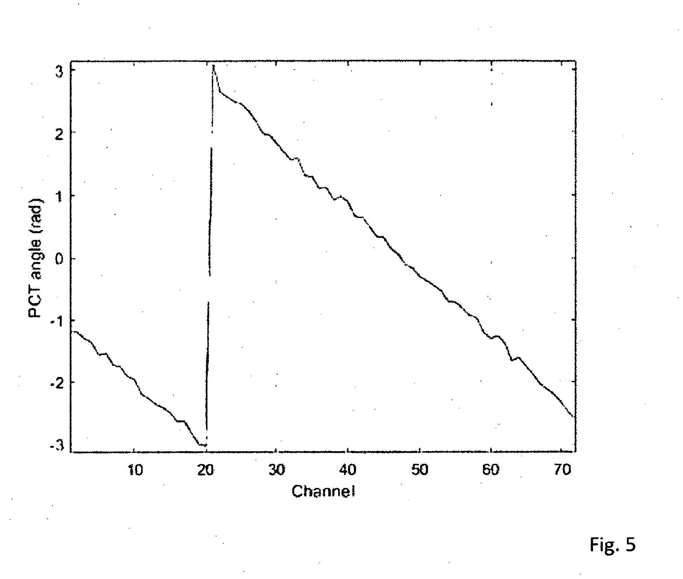

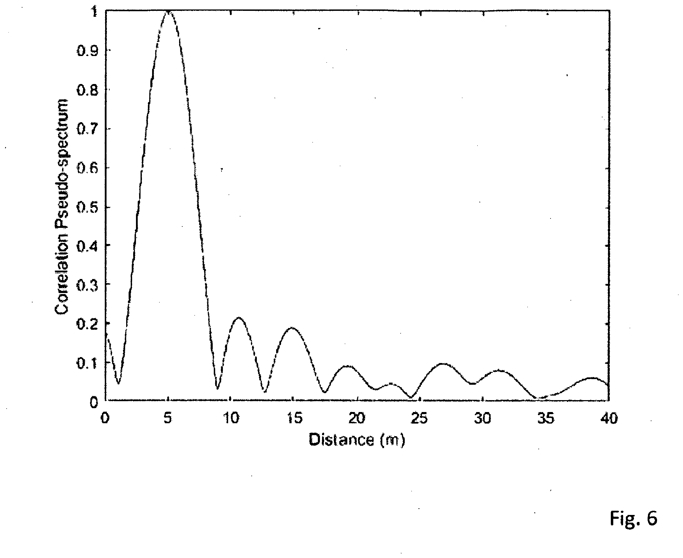

As an example, figure 5 illustrates measurements made on a channel with 5m distance, and the corresponding pseudo spectrum in figure 6.

According to an embodiment, and in the context of the present invention, a "step size", also called "grid step size", refers to the distance or delay between successive measurements in distance or angle estimation processes. It is an adjustable parameter that influences the smoothness and computational practicality of the measurement criteria. The grid step size can be chosen based on predefined criteria or parameters, or determined by external information, such as antenna array directivity or third-party data. The selection of a suitable grid step size allows for efficient and accurate estimation while ensuring sufficient angular resolution and minimizing interference.

According to an embodiment, the grid step size for distance estimation is selected within a range of 0 to 150 meters. Preferably, this selection is made based on predefined criteria or parameters. Additionally, the method may involve obtaining third-party information to determine the grid step size. This external data can be obtained from various sources such as GPS systems, maps, or databases. Utilizing third-party information can enhance the precision of the distance estimation process. According to an embodiment, minimum and maximum values can be provided by the device executing the method 100. The default values can be 0 to 150m, since it is the inherent non-ambiguous range of channel sounding. The default values can also be changed based on third party information. For example, in some cases, depending of the frequencies used, non-ambiguous range can be reduced (if frequencies are separated by 2MHz, this range changes to 75m). Advantageously, grid step size can be chosen close to make use of the natural smoothness of the measurement and to result in computational practicality. Step size of the grid can be viewed as distance or delay, which is equivalent (150m~=1us). Natural smoothness of the measurement is 1/80MHz = 12.5 ns = 1.875 m. This means that the computed criterion is likely to have smooth variations in a range of 1.875m. This means that, preferably, grid step size is equal or lower to 1.875m. For practicality, to ease criterion computation on a processing unit (with only integer operations, no sin/cos native function available for example), the present invention is configured to use a grid step size of $\frac{1}{{2}^{J}}$ µs, where J is integer during the first pseudo-spectrum computation "coarse" step. The minimum value of J to fulfill the 12.5 ns criterion is 7, and preferably the present invention uses 8 to have a slightly finer initial accuracy. This results in steps of 1/256us = 3.9ns = 58.5 cm.

According to an embodiment, the size of the step is equal to $\frac{1}{{2}^{J}}$ µs, where J is an integer. Preferably, the minimum value of J is higher or equal to 7. Advantageously, J is set equal to 8.

According to an embodiment, the geometrical metric can represent at least one angle of arrival. Furthermore, the first set of measurement results comprises a collection of measurement data obtained from the radio signal transceiver having a specific number of antennas. For each candidate value of the geometrical metric within the grid, the pseudo-spectrum is calculated using the following equation: $S \left(Θ\right) = {\sum }_{a = 0}^{{N}_{a} - 1} P \left(a\right) {e}^{- \vec{{ik}_{Θ}} . \vec{{d}_{a}}}$ Where:
- *P*(*a*) is a measurement from a constant tone extension
- *̅k̅_̅{̅Θ̅}̅*̅ is the wave vector: $\vec{{k}_{Θ}} = \frac{2 πf \vec{{u}_{Θ}}}{c}$, where *̅u̅*̅_̅{̅Θ̅}̅ is the unit vector in the considered direction Θ.
- *̅d̅ₐ̅*̅ is the position vector of the antenna *̅d̅ₐ̅*̅ = *̅O̅M̅ₐ̅*̅, where *O* is the center of said array of antennas and *Mₐ* is the position of the antenna.

Advantageously, using $\vec{{k}_{Θ}} = \frac{2 πf \vec{{u}_{Θ}}}{c}$, one obtains: $S \left(Θ\right) = {\sum }_{a = 0}^{{N}_{a} - 1} P \left(a\right) {e}^{- \frac{2 iπf}{c} \vec{{u}_{Θ}} . \vec{{d}_{a}}}$

Where *̅u̅_̅{̅Θ̅}̅*̅. *̅d̅ₐ̅*̅ is, for each antenna, the value (in meters) of the projection of the antenna direction onto the considered candidate direction.

Preferably, this calculation involves taking a measurement from a constant tone extension and determining its wave vector, denoted as *̅k̅_̅{̅Θ̅}̅*̅. The unit vector in the considered direction is represented by u, while the position vector of each antenna is denoted by *̅d̅ₐ̅*̅, with the center of the array of antennas being located at the origin (0, 0, 0). For a given antenna position a', the position difference between a and a' is used to calculate the geometrical metric value. Advantageously, the present invention allows for accurate determination of the angle of arrival of radio signals by calculating the pseudo-spectrum for various candidate values of the geometrical metric within the grid. This information can be utilized in various applications such as radio navigation systems and wireless communication networks. Additionally, the use of a grid to calculate the pseudo-spectrum for multiple candidate values allows for a more comprehensive analysis of the incoming signals.

According to an embodiment, the step size for angle of arrival estimation can be determined based on the directivity of an antenna array of the first radio signal transceiver. Preferably, the range for linear arrays is set to default values between 0 and 180 degrees. In contrast, the range for planar arrays is advantageously set to default values between 0 and 90 degrees.

The directivity of an antenna array refers to its ability to radiate energy in a particular direction. By considering the directivity of the antenna array when selecting the step size for angle of arrival estimation, more accurate estimations can be achieved. This is because the antenna array's directivity influences the angular resolution of the system. The choice of default values for the range and step size depends on the specific geometry and configuration of the linear or planar antenna arrays. For example, when the antenna array has dimensions close to half the signal wavelength, the expected accuracy is high, therefore a fine step size is required to benefit from this accurate ray, whereas when the array has smaller dimension, it is possible to use coarser step size, since using fine steps cannot provide better accuracy due to the limitations of the array itself.

These features enable the method to adaptively adjust the angle of arrival estimation based on the specific characteristics of the antenna array used in the first radio signal transceiver, improving the overall accuracy and reliability of the system.

According to an embodiment, minimum and maximum values are determined by geometrical configuration.

For example:
- with linear antenna arrays, the present invention is configured to look for 1 angle comprises between 0 to 180 degrees;
- with planar arrays, the present invention is configured to look for 2 angles: bearing (+/- 180 degrees) and elevation (0 to 90 degrees).

According to an embodiment, the step size can be chosen based on the directivity of the antenna array. Directivity defines the ability of the array to distinguish between angles. It is related to the criterion sharpness. It can be computed based on the geometry of the antenna array.

According to an embodiment, unlike for the distance case, when the geometrical metric is an angle of arrival, there is only one coherence group since captures are made over a very short period. Advantageously, the present invention supports multi-antenna operations, where the result from each step and each device is a set of N_{AP} (number of antenna paths) measurements. An antenna path is a pair of antennas (one from each device). For example, if the first device has 3 antennas and the second device has 1 antenna, it is possible to run a procedure with N_{AP} = 3.

According to an embodiment, the angle estimation can be based on the CTE (Constant Tone Extension), an extension of BT packets containing a continuous tone (single frequency). During the CTE, the array-equipped device, the first radio signal transceiver 210, performs antenna switching, and the receiving device, the reflector 220, samples the incoming signal.

Preferably, the result is a set of complex valued data, in which phase can be analyzed to derive angle estimates: as in channel sounding, phase relates to distance, and using distance differences to the different antennas of an array with known positions allows to estimate angles.

According to an embodiment, as for the distance case, the angle estimation approach is the following:
- Construct a grid of candidate angles of arrival (can be 1D or 2D, for bearing and elevation)
- For all candidates: compute pseudo spectrum using a scalar product with a reference vector built from considered candidate
- Find maximum
- Estimate and remove contribution of this direction of arrival
- Repeat until said stopping criterion is met.

According to an embodiment, the difference with the channel sounding case, i.e. the distance case, are:
- Only one coherence group, because capture is made over a very short period; or at least all measurements belong to the same coherence group.
- The set of directions of arrival cannot be sorted hierarchically, unlike channel sounding, where the searched distance is the shortest one.

According to an embodiment, in the context of multi-antenna, an antenna path is a pair of antennas (one from each device). For example:
- if the first radio signal transceiver 210 has 3 antennas (number 1, 2 and 3) and the reflector 220 has 1 antenna (4), it is possible to run the present invention with NAP = 3. Preferably, antenna paths are: {1,4}, {2,4} and {3,4}.
- if the initiator has 2 antennas (1 and 2) and the reflector has also 2 antennas (3 and 4), it is possible to run the present invention with N_{AP} =4. Preferably, antenna paths are {1,3}, {2,3}, {1,4} and {2,4}.

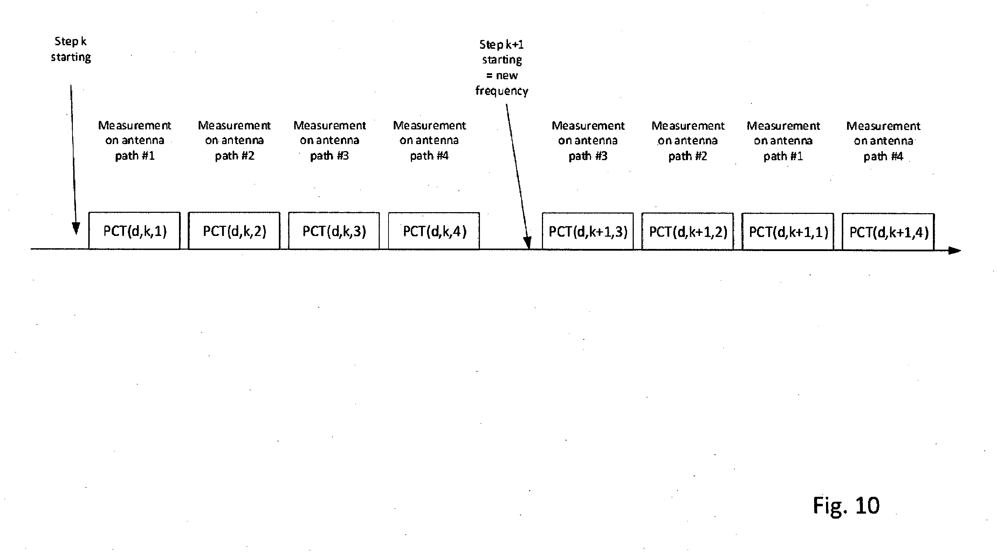

Figure 10 illustrates that PCTs from each can be noted *PCT*(*d*, *f*, *a*), where *d* is the device (initiator or reflector), *f* is the frequency (associated to the step), and a is the antenna path.

According to an embodiment, the present invention comprises estimating the contribution of a candidate geometrical metric value using the following steps:
- Calculating a search vector *αₙ* of *G* complex values, one per coherence group: *αₙ*(*g*), g = 0 to G;
- Computing said contribution for each coherence group, as follow: ${α}_{n} \left(g\right) = {\sum }_{q = 0}^{{Q}_{g} - 1} P \left({k}_{g , q}\right) {P}_{{\hat{d}}_{n}}^{∗} \left({k}_{g , q}\right)$

Which corresponds to the scalar product of the sub-vectors of the measurement (*P*) and the reference (*P_{d̂ₙ}*), corresponding to group g, and *αₙ*(*g*) is a complex value.

Preferably, for each coherence group g, where g ranges from 0 to G, the estimation process involves calculating a search vector of complex values. Advantageously, this calculation is performed independently for each coherence group. In more detail, according to an embodiment, the search vector *αₙ* is computed as a set of complex values, one per coherence group.

Furthermore, the contribution for each coherence group is calculated by computing the scalar product of the sub-vectors of the measurement (P) and the reference vector (*P_{d̂ₙ}*), corresponding to group g. The result of this operation is a complex value that represents the contribution of the candidate geometrical metric value to the coherence group g.

This method allows for an efficient estimation of the contribution of a candidate geometrical metric value to each coherence group by performing the calculation independently for each group. This can lead to improved accuracy and faster processing times compared to methods that calculate the contribution for all groups simultaneously. Additionally, the use of complex values enables the method to handle more complex data sets and provides a more robust estimation of the contributions. According to an embodiment, and as previously described, for removing the contribution of at least one candidate geometrical metric value, the present invention can comprise, for each coherence group g and each index q belonging to this group, removing the estimated contribution from the input data term by term, as previously indicated by equation 12.

Advantageously, this process allows for a selective removal of specific geometrical metric values that may negatively impact the analysis within each coherence group. Preferably, the removal of these contributions is performed in a systematic and methodical manner to ensure accuracy and consistency across all groups.

According to an embodiment, the stopping criterion can be based on the number of iterations of the deflation loop. Preferably, the deflation loop is a computer-implemented mathematical algorithm configured to identify the correct geometrical metric value.

According to another embodiment, the stopping criterion is based on the contribution power: *Aₙ* = ${\sum }_{g = 0}^{G - 1} {Q}_{g} . {\left|{α}_{n}\left(g\right)\right|}^{2}$. Moreover, according to an embodiment, the present invention may involve setting a threshold value for the contribution power.

According to an embodiment, the stopping criterion can be met if:
- The number of iterations is higher than a predetermined number of iterations; and/or
- The last power contribution of the new input data is lower than a predetermined number *β* times the first power contribution of the input data. Preferably, *Aₙ < β.A*₀, where *β* is a predetermined parameter (with normally *β* < 1). This means that the deflation loop is advantageously stopped when the last power contribution is lower than *β* times the first contribution (contributions tend to diminish at each loop iteration).

According to this embodiment, the number of iterations is compared to a predetermined number, i.e. a predetermined threshold. If the number of iterations is below this threshold, then the method proceeds to the next condition.

Advantageously, the last power contribution of the new input data is evaluated against a predetermined number multiplied by the first power contribution of the input data. If the last power contribution of the new input data is lower than a predetermined number *β* times the first power contribution of the input data, then the convergence criteria are met. According to an embodiment, the present invention comprises a two-step maximum search for estimating the contribution of a candidate geometrical metric value. Preferably, the first search step of this two-step maximum search is performed on a fixed geometrical metric value grid. The resolution of this grid should be higher than 1m, preferably than 0.5m.

Advantageously, the second search step is carried out in the neighborhood of the first estimated maximum. This step helps obtain an accurate estimate of the strongest path of the iteration on the input data.

According to an embodiment, the method for estimating a geometrical metric value comprises finding the maximum of a pseudo-spectrum on the input data. Preferably, this is accomplished by applying a suitable transform to the input data and identifying the peak in the resulting spectrum. Advantageously, the maximum value and the values of the two neighbors immediately adjacent to it are extracted from the pseudo-spectrum. These values provide important context for estimating the contribution of the candidate geometrical metric value.

Furthermore, a 2^{nd} order polynomial is computed to approximate the underlying pseudo-spectrum curve around the maximum value and its neighbors. This polynomial serves as an effective model for understanding the shape and behavior of the pseudo-spectrum in this region.

Advantageously, the maximum position of this polynomial is determined to represent the location of the peak in the original data. By using a 2^{nd} order polynomial, the method can more accurately estimate the contribution of the candidate geometrical metric value based on the shape and curvature of the pseudo-spectrum around the maximum. The use of a 2^{nd} order polynomial to approximate the underlying pseudo-spectrum curve allows for more accurate estimation of the contribution of the candidate geometrical metric value.

Extracting the values of the two neighbors provides important context for estimating the contribution, allowing for more precise calculations.

According to an embodiment, the present invention can comprise a radio frequency channel sounding process for acquiring measurement results. This process involves performing a series of tone exchanges on at least one predetermined set of radio frequency channels between the first radio signal transceiver and the second radio signal transceiver. Preferably, each radio signal transceiver is configured to measure the phase and magnitude of at least one received incoming tone and correct its phase with its own transmitted phase during the tone exchanges. By doing so, they can estimate the forward/backward channel frequency response. Advantageously, this approach allows for accurate measurement of radio frequency channels, which is essential for various applications such as wireless communication systems.

According to an embodiment, the present invention is configured to handle multipath propagation through an iterative approach, where different contributions are successively estimated and removed from the input data so that "shadowed" contributions can be estimated. Each contribution is estimated using a 2-steps (coarse/fine) approach to significantly save computations.

According to an embodiment, to save computations while keeping enough resolution, the present invention is configured to implement a 2 steps search. Preferably, the first search step is performed on a fixed distance grid with enough resolution to ensure no local maximum will be missed. Advantageously, the second search step is performed in the neighbourhood of the first step maximum, to obtain an accurate estimate of the strongest path of the iteration.

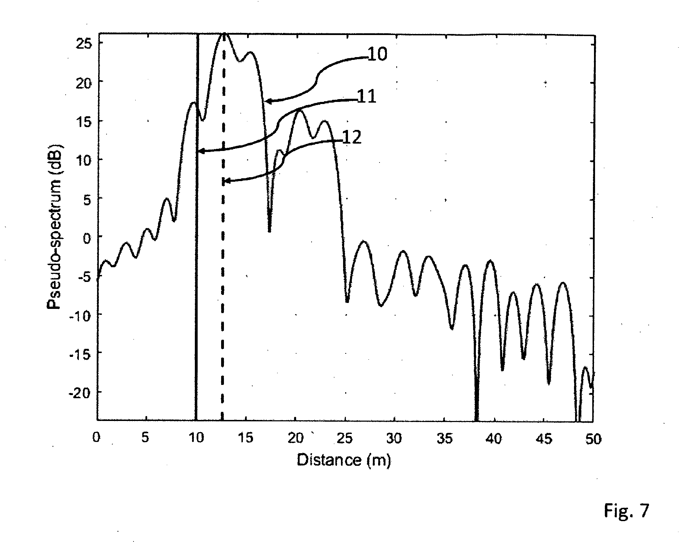

Figures 7, 8 and 9 illustrate iterative steps to estimate a distance, using a simulated propagation channel. In this example, the conditions are the following:
- Actual distance: 10m
- Propagation channel: WiFi channel B

Figures 7, 8 and 9 show the pseudo-spectrum curve 20 for the first 3 iterations. Indeed, according to this example, the deflation loop stops at the 4^{th} iteration where contribution power is below a predetermined threshold.

Figure 7 illustrates the first iteration. In this first iteration the maximum is at 12.5m, and a smallest "significant" visible maximum seems to be a little less than 10m, but there are smaller maximums, that could probably be discarded based on a power criterion.

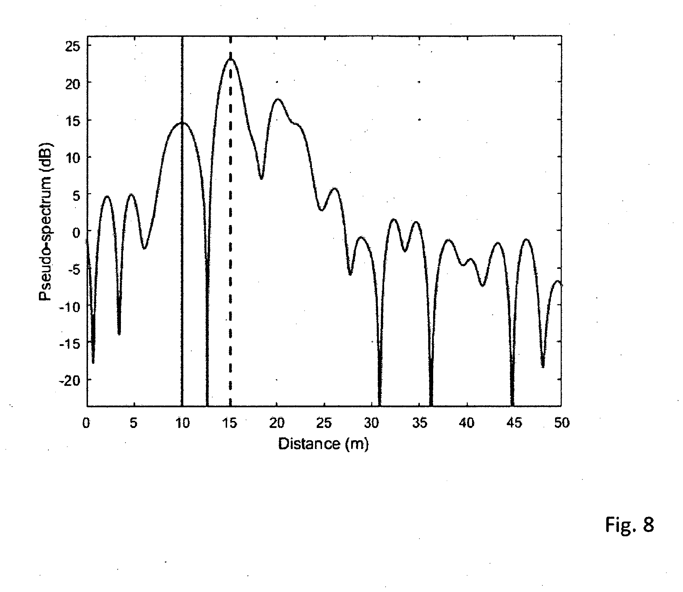

Figure 8 illustrates the second iteration. In this second iteration the maximum is at 15m. A null is present at 12.5m, where contribution has been removed during previous iteration. The 15m path contribution is removed for next iteration.

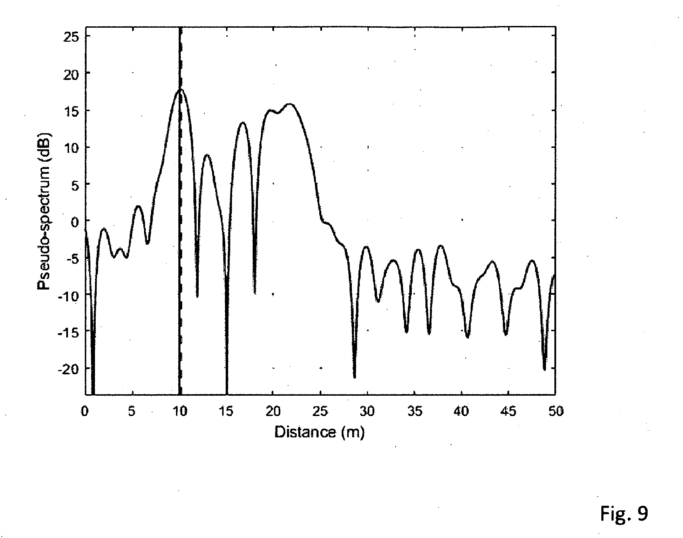

Figure 9 illustrates the third iteration. In this third and final iteration, the maximum is at 10m, which is the actual distance. The corresponding power is above the predetermined power threshold, so the 10m path is validated, and distance error is close to 0.

According to an embodiment, the present invention is configured to implement at least one of three solutions for estimating and removing contributions: no refinement, refinement using a finer grid, and using a 2^{nd} order polynomial approximation to estimate the contribution.

According to an embodiment, in case of no refinement, at each iteration, estimate *d̂ₙ* corresponds to the pseudo-spectrum maximum position.

According to an embodiment, in case of refinement, the present invention is configured to compute pseudo spectrum on a finer grid centered on the maximum position of the first pseudo-spectrum. Preferably, the estimate *d̂ₙ* is the distance value corresponding to the finer pseudo-spectrum maximum. According to an embodiment, the finer grid, also called second grid, can be defined with the following settings:
- Range = 1 or 2 times the coarse grid steps;
- Fine step = coarse step / 2^{K}. Given that the coarse step is 1/2^{J} µs, then the fine step is 1/2 ^{(J+K)} µs. To obtain final accuracy of a few cm maximum, J+K is preferably equal or higher than 12 (then the fine step 150/4096 = 3.6 cm).

According to an embodiment, in case of use of a second order polynomial approximation, the present invention is configured to implement the following steps:
- Finding the maximum of the initial pseudo-spectrum;
- Extracting the maximum value, and preferably the values of the two neighbors (distance bins immediately at left and right of the maximum index);
- Computing the maximum position of the 2^{nd} order polynomial passing through the 3 extracted points, as this polynomial is assumed to approximate the underlying pseudo-spectrum curve.

Figure 12 illustrates this embodiment:
- Circles: the pseudo spectrum, centered on the maximum value among the candidate grid:
   ∘ Maximum value is the circle at x=0, equal to 4
   ∘ Both neighbors are also represented as circles at -1 and +1.
- Curve: approximation polynomial. Here, for this example, it is equal to: Equation 16 : *p*(*x*) = *a*₂*x*² + *a*₁*x* + *a*₀
Where ${a}_{0} = S \left(0\right)$ ${a}_{1} = \frac{S \left(1\right) - S \left(-1\right)}{2}$ ${a}_{2} = \frac{S \left(1\right) - 2 S \left(0\right) + S \left(-1\right)}{2}$

The maximum of the curve is at : $\hat{x} = - \frac{{a}_{1}}{2 {a}_{2}} = \frac{S \left(-1\right) - S \left(1\right)}{2 \left(S\left(1\right)-2S\left(0\right)+S\left(-1\right)\right)}$

According to an embodiment, the present invention is configured to:
- find the index of pseudo-spectrum maximum *x_{g}* = *argmax*(*S*)
- compute the estimated offset from this index: $\hat{x} = \frac{S \left({x}_{g}-1\right) - S \left({x}_{g}+1\right)}{2 \left(S\left({x}_{g}+1\right)-2S\left({x}_{g}\right)+S\left({x}_{g}-1\right)\right)}$
then, preferably, the final fractional grid index is *x_{g}* + *x̂*

According to an embodiment, the present invention relates to a first radio signal transceiver 210 comprising at least:
- a wireless communication unit 211,
- a memory unit 212,
- a processing unit 213, and
- an antenna 214.

According to an embodiment, the wireless communication unit 211 is configured to send and receive data to at least one second radio signal transceiver 220.

According to an embodiment, the memory unit 212 is configured to store data and at least one computer program.

According to an embodiment, the processing unit 213 is configured to execute at least said computer program.

According to an embodiment, the first radio signal transceiver comprises at least one array of antennas. Preferably, the array of antennas is designed for omni-directional radiation and/or for specific directionality depending on the application requirements. The number of antennas in the array can be customized to optimize coverage and transmission efficiency. This results in better communication reliability and longer range capabilities. Moreover, the antenna array can be integrated with other components of the transceiver, such as power amplifiers or filters, to form a compact and efficient design.

According to an embodiment, and as illustrated by figure 2, the present invention relates to a radio signal processing system 200 as previously described. This radio signal processing system 200 is configured to estimate at least one geometrical metric between a first radio signal transceiver 210 and a second radio signal transceiver 220 using phase-based measurements and coherence group processing, as previously described.

Preferably, the first radio signal transceiver 210 comprises a wireless communication unit configured to send and receive data to at least one second radio signal transceiver 220, a memory unit configured to store data and at least one computer program, and a processing unit configured to acquire a set of measurement results, define at least one coherence group, construct at least one grid of candidate geometrical metric values, select input data consisting of the set of measurement results, apply a deflation loop for each candidate geometrical metric value in the grid, and generate new input data by removing the estimated contribution from the input data.

Advantageously, the second radio signal transceiver 220 also comprises a wireless communication unit for sending and receiving data to the first radio signal transceiver 210, a memory unit for storing data and instructions, and a processing unit for executing the instructions.

This invention relates to a method for estimating geometrical metrics, specifically distance and angle, between devices using phase-based measurements. The method involves defining coherence groups based on criteria such as measurement instant, application type, and device motion. For each candidate metric value, a pseudo spectrum is computed using coherence group-wise correlations or scalar products. The maximum correlation is found, and the corresponding contribution is estimated and removed. This process is repeated until a stopping criterion is met. Each contribution is estimated using a 2-steps (coarse/fine) approach to handle multipath issues through an iterative approach where contributions are successively estimated and removed from the input data. The method can be used in Bluetooth Channel Sounding, which will be part of future Bluetooth 6.0 "Atlanta," for estimating distance between moving devices based on BLE Channel Sounding measurements. It is a solution that mitigates both multipath propagation effect and channel coherency issue by using vector inputs containing the product of measurements made on initiator and reflector devices, channel number, and coherence group. The method uses a correlation-deflation algorithm to iteratively estimate each linear component and deflate the PCT from estimated path components for better visibility of weaker paths.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is, therefore, intended to be limited solely by the scope of the appended claims.

### References

10 Pseudo-spectrum curve
11 Real distance
12 Analysis function
20 Pseudo spectrum curve
21 Approximation polynomial
100 A method for estimating a geometrical metric between a first radio signal transceiver and a second radio signal transceiver
110 Acquiring a first set of measurements results
120 Defining a coherence group
130 Constructing a grid of candidates
140 Selecting input data
150 Applying a deflation loop
151 Computing a pseudo-spectrum
152 Finding the maximum correlation
153 Estimating the contribution of the candidate
154 Generating new input data by removing the estimated contribution
155 Repeating steps 151 to 154 with the new input data until meeting a predetermined criterion
200 A radio signal processing system for estimating a geometrical metric between a first radio signal transceiver and a second radio signal transceiver
210 A first radio signal transceiver
211 A wireless communication unit
212 A memory unit
213 A processing unit
214 An antenna
220 A second radio signal transceiver
221 A wireless communication unit
222 A memory unit
223 A processing unit
224 An antenna

## Claims

1. A method (100) for estimating a geometrical metric between a first radio signal transceiver (210) and a second radio signal transceiver (220), using phase-based measurements and coherence group processing, the method being configured to be executed by a radio signal processing system (200) comprising the first radio signal transceiver (210) and the second radio signal transceiver (220), the method (100) comprising the following steps:
a) Acquiring (110), by the first radio signal transceiver (210), a first set of measurement results, the first set of measurement results comprising a set of two-way frequency responses, the set of two-way frequency responses comprising a measured two-way frequency response for each frequency of a predetermined list of frequencies, each of these two-way frequency responses comprising vectors of complex-valued data;
b) Defining (120), by a processing unit (213) of the first radio signal transceiver (210), at least one set of coherence groups, each coherence group of this set of coherence group comprising at least one subset of the first set of measurement results, each subset of the first set of measurement results comprising:
• Results of measurements taken at the same time frame; and/or
• Results of measurements taken during the same application running on at least one among said first radio signal transceiver (210) and said second radio signal transceiver (220); and/or
• Results of measurements taken when at least one radio signal transceiver among said first radio signal transceiver (210) and said second radio signal transceiver (220) is stationary or moving at a certain speed regarding the at least another radio signal transceiver taken among said first radio signal transceiver (210) and said second radio signal transceiver (220); and/or
• Results of measurements from the same pair of antennas, preferably one from each radio signal transceiver taken among said first radio signal transceiver (210) and said second radio signal transceiver (220);
c) Constructing (130), by the processing unit (213) of the first radio signal transceiver (210), a grid of candidate geometrical metric values;
d) Selecting (140) input data, said input data comprising the first set of measurement results (PCT);
e) Applying (150) a deflation loop on the first set of measurement results (PCT), by the processing unit of the first radio signal transceiver, the application of a deflation loop comprising:
i. Computing (151) a pseudo-spectrum indexed by the geometrical metric values in the grid, using scalar products, preferably made group per group; and
ii. Finding (152) the geometrical metric value corresponding to the pseudo-spectrum maximum; and
iii. Estimating (153) the contribution of this candidate geometrical metric value; and
iv. Generating (154) new input data by removing the estimated contribution from the input data;
v. Repeating (155) steps i to iv on the new input data until a stopping criterion is met.
f) when the stopping criterion is met, the final estimated geometrical metric value is selected among the set of candidate geometrical values.

2. The method (100) according to claim 1, comprising:
- a step of recording the estimated contribution of each candidate geometrical metric values, after the step of estimating the contribution of the candidate geometrical metric value;
- after applying the deflation loop, calculating a threshold based on the recorded estimated contribution of the candidate geometrical values;
- in response to meet the stopping criterion, selecting a set of estimated contributions, each estimated contribution of this set of estimated contributions being greater than the calculated threshold; and
- determining the smallest geometrical metric value among the geometrical metric values of the set of estimated contributions.

3. The method (100) according to claim 1 wherein the final estimated geometrical metric value is the minimal value among the set of candidate geometrical values.

4. The method (100) according to claim 1 wherein the geometrical metric is a distance, preferably the shortest distance, between the first radio signal transceiver (210) and the second radio signal transceiver (220), and wherein the criterion is a power lower than a predetermined power threshold, and wherein the candidate geometrical metric value is the minimum distance corresponding to the shortest path between the first radio signal transceiver (210) and the second radio signal transceiver (220).

5. The method (100) according to claim 1 wherein the first radio signal transceiver (210) comprises an array of antennas, each antenna of the array of antennas having a predetermined position, and wherein the geometrical metric is an angle of arrival between the first radio signal transceiver (210) and the second radio signal transceiver (220), and wherein the angle of arrival is determined using distance differences between each antenna of said array of antennas and the second radio signal transceiver (210), and wherein the criterion is a power lower than a predetermined power threshold, and wherein the candidate geometrical metric value is calculated using the minimum distance corresponding to the shortest path between the second radio signal transceiver (220) and each of the antenna of the array of antennas.

6. The method (100) according to any one of the previous claims wherein the vector of complex-valued data comprised the following vectors:
• {*P*(*k*)}: the vector comprising, for each frequency of the predetermined list of frequencies, the product of the measurements made on the first radio signal transceiver (210) and the second radio signal transceiver (220), P being an estimate of the two-way frequency response at each frequency of the predetermined list of frequencies;
• {*fₖ*}: the vector comprising, for each frequency of the predetermined list of frequencies, data related to the frequency;
• {gₖ}: the vector comprising the coherence group, the measurement results belongs to.

7. The method (100) according to the previous claim wherein the geometrical metric is a distance and wherein, for each candidate geometrical metric value in the grid, the pseudo-spectrum is a sum of coherence group-wise correlations between a measurement result and an expected measurement result corresponding to the candidate geometrical metric value as follow: $S \left(b\right) = {\sum }_{g = 0}^{G - 1} \left({\left‖{\sum }_{q = 0}^{{Q}_{g} - 1} P \left({k}_{g , q}\right) {e}^{2 iπ \frac{2 {d}_{b} {f}_{{k}_{g , q}}}{c}}\right‖}^{2}\right)$ Where:
• b is the index in the candidate geometrical metric value grid,
• *G* is the number of coherence groups
• *Q_{g}* is the number of steps belonging to coherence group g .
• *k_{g,q}* is the q-th measurement results index in group g
• *d_{b}* is the geometrical metric value corresponding to index b
• *f_{k_{g,q}}* is the radio frequency channel of step *k_{g,q}*
• *P*(*k_{g,q}*) is the two-way measurement result of index *k_{g,q}*: on group index g and in-group index q
• c is the wave propagation speed in m/µs

8. The method (100) according to the previous claim wherein the step has a size chosen to be equal to $\frac{c}{{2}^{J}}$ µs, where J is an integer, and wherein the minimum value of J is higher or equal to 8, preferably equal to 9.

9. The method (100) according to claim 6 wherein the geometrical metric is an angle of arrival, and wherein the first set of measurement results comprises a set of measurement results, where Nₐ is the number of antennas of the first first radio signal transceiver and wherein, for each candidate geometrical metric value in the grid, the pseudo-spectrum is as follow: $S \left(Θ\right) = {\sum }_{a = 0}^{{N}_{a} - 1} P \left(a\right) {e}^{- i \vec{{k}_{Θ}} . \vec{{d}_{a}}}$ Where:
• *P*(*a*) is a measurement from a constant tone extension
• *̅k̅_̅{̅Θ̅}̅*̅ is the wave vector: $\vec{{k}_{Θ}} = \frac{2 πf \vec{{u}_{Θ}}}{c}$, where u̅_̅{̅Θ̅}̅ is the unit vector in the considered direction Θ.
• *̅d̅ₐ̅*̅ is the position vector of the antenna *d̅ₐ̅ = O̅M̅ₐ̅,* where *O* is the center of said array of antennas and *Mₐ* is the position of the antenna.

10. The method (100) according to any one of the previous claims wherein estimating the contribution of the candidate geometrical metric value comprises:
• Calculating a search vector *αₙ* of *G* complex values, one per coherence group: *αₙ*(*g*), g = 0 to G;
• Computing the contribution for each coherence group, as follow: ${α}_{n} \left(g\right) = {\sum }_{q = 0}^{{Q}_{g} - 1} P \left({k}_{g , q}\right) {P}_{{\hat{d}}_{n}}^{*} \left({k}_{g , q}\right)$
Which corresponds to the scalar product of the sub-vectors of the measurement (*P*) and the reference (*P_{d̂ₙ}*), corresponding to group g, and *αₙ*(*g*) is a complex value.

11. The method (100) according to any one of claims 1 to 10 wherein said stopping criterion is met if:
• The number of iterations is higher than a predetermined number of iterations, or
• The last power contribution of the new input data is lower than a predetermined number β times the first power contribution of the input data.

12. The method (100) according to any one of the previous claims wherein estimating the contribution of the candidate geometrical metric value comprises:
• Finding the maximum of a pseudo-spectrum on the input data;
• Extracting the maximum value and the values of the two neighbors immediately at left and right of said maximum;
• Computing the maximum position of a second order polynomial passing through the maximum value and said two neighbors, as this polynomial is configured to approximate the underlying pseudo-spectrum curve.

13. A computer product program for estimating a geometrical metric between a first radio signal transceiver (210) and a second radio signal transceiver (220) which, when executed by a processing unit (213,223), executes the method (100) according to any one of the previous claims.

14. A computer-readable storage medium storing instructions that, upon being executed by a processing unit (213, 223), cause the processing unit (213, 223) to perform the method (100) according to any one of claims 1 to 12.

15. A first radio signal transceiver (210) comprising:
• A wireless communication unit (211) configured to send and receive data to a second radio signal transceiver (220);
• A memory unit (212) configured to store data and a computer product program according to claim 13;
• A processing unit (213) configured to execute the computer product program.

16. A radio signal processing system (200) for estimating a geometrical metric between a first radio signal transceiver (210) and a second radio signal transceiver (220) using phase-based measurements and coherence group processing, the system (200) comprising:
a) A first radio signal transceiver (210), the first radio signal transceiver (210) comprising:
• A wireless communication unit (211), the wireless communication unit (211) being configured to send and receive data to a second radio signal transceiver (220);
• A memory unit (212), the memory unit (212) being configured to store data and a computer product program;
• A processing unit (213), the processing unit (213) being configured to:
∘ Acquire at least one first set of measurement results;
∘ Define at least one coherence group;
∘ Construct at least one grid of candidate geometrical metric values;
∘ Select input data, the input data comprising the first set of measurement results;
∘ Apply a deflation loop on the first set of measurement results, the application of a deflation loop comprising:
i. Computing a pseudo-spectrum indexed by the geometrical metric values in the grid, using scalar products, preferably made group per group; and
ii. Finding the geometrical metric value corresponding to the pseudo-spectrum maximum; and
iii. Estimating the contribution of this candidate geometrical metric value; and
iv. Generating new input data by removing the estimated contribution from the input data;
v. Repeating steps i to iv on the new input data until a stopping criterion is met.
b) The second radio signal transceiver (220), the second radio signal transceiver (220) comprising:
• A wireless communication unit (221), the wireless communication unit (221) being configured to send and receive data to the first radio signal transceiver (210);
• A memory unit (222), the memory unit (222) being configured to store data and instructions;
• A processing unit (223), the processing unit (223) being configured to execute instructions.
